# EUROPEAN PATENT APPLICATION

(11) **EP 4 788 054 A1**
(43) Date of publication of application: **05.08.2026**
(21) Application number: 24869978.7
(22) Date of filing: 11.07.2024
(51) Int. Cl.: H04W 88/04

(54) **INFORMATION TRANSMISSION METHOD, APPARATUS AND TERMINAL**

(30) Priority: 27.09.2023 CN 202311256839
(71) Applicant: Datang Mobile Communications Equipment Co., Ltd., Beijing 100085 (CN)
(72) Inventor: ZHAO, Yali, Beijing 100085 (CN); XU, Hao, Beijing 100085 (CN)
(74) Representative: Maiwald GmbH
(86) International application number: PCT/CN2024/104840
(87) International publication number: WO 2025/066422

(57) **Abstract**

The present disclosure provides an information transmission method, an apparatus, and a terminal. The method is executed by a first remote terminal, and comprises: acquiring from a relay terminal target identification information of a second remote terminal, wherein the target identification information is used for the first remote terminal to establish an end-to-end connection with the second remote terminal by means of the relay terminal, and the target identification information comprises a layer 2 identifier and/or a local identifier.

## Description

### CROSS-REFERENCE TO RELATED APPLICATION

This disclosure claims priority to Chinese Patent Application No. 202311256839.7, filed with the Chinese Patent Office on September 27, 2023, entitled "Information Transmission Method, Apparatus, and Terminal", the disclosures of which are incorporated herein by reference in its entirety.

### TECHNICAL FIELD

The present disclosure relates to the field of communication technologies, and in particular, to an information transmission method, an apparatus, and a terminal.

### BACKGROUND

According to the current UE-to-UE relay discovery (U2U relay discovery) process, a first remote terminal (i.e., a source remote UE) can only obtain, from a relay terminal (Relay UE), a terminal information list (i.e., a 5G ProSe end UE info list) or a user information identifier (user info ID) of a second remote terminal (i.e., an end remote UE or a target remote UE) with which an end-to-end connection is to be established. The first remote terminal cannot establish an end-to-end connection with the second remote terminal through the relay only by using this information.

### SUMMARY

Embodiments of the present disclosure provide an information transmission method, an apparatus, and a terminal, to ensure that an end-to-end connection can be smoothly established between a first remote terminal and a second remote terminal through a relay terminal.

To resolve the foregoing technical problem, an embodiment of the present disclosure provides an information transmission method performed by a first remote terminal, the method including:
obtaining target identification information of a second remote terminal from a relay terminal, wherein the target identification information is used by the first remote terminal to establish an end-to-end connection with the second remote terminal through the relay terminal;
wherein the target identification information includes a layer-2 identifier and/or a local identifier.

In some embodiments, obtaining the layer-2 identifier of the second remote terminal from the relay terminal includes at least one of the following:
receiving a relay-discovery related message from the relay terminal, wherein the relay-discovery related message carries the layer-2 identifier of the second remote terminal, and the relay-discovery related message includes: a relay discovery announcement message and/or a relay discovery response message;
obtaining the layer-2 identifier of the second remote terminal from the relay terminal during establishing a sidelink communication interface signaling PC5-S or a sidelink communication interface radio resource control PC5-RRC connection with the relay terminal and/or after establishing the PC5-S or PC5-RRC connection with the relay terminal; wherein a quantity of the second remote terminals is one or more.

In some embodiments, obtaining the local identifier of the second remote terminal from the relay terminal includes at least one of the following:
receiving a relay-discovery related message from the relay terminal, wherein the relay-discovery related message carries the local identifier of the second remote terminal, and the relay-discovery related message includes: a relay discovery announcement message and/or a relay discovery response message;
obtaining the local identifier of the second remote terminal from the relay terminal during establishing a PC5-S or PC5-RRC connection with the relay terminal and/or after establishing the PC5-S or PC5-RRC connection with the relay terminal.

In some embodiments, obtaining the local identifier of the second remote terminal from the relay terminal includes:
receiving a first message from the relay terminal, wherein the first message carries at least the local identifier of the second remote terminal; wherein the first message includes the PC5-S message or the PC5-RRC message.

In some embodiments, the first message further carries at least one of the following: a terminal identifier of the second remote terminal and a layer-2 identifier of the second remote terminal.

In some embodiments, the method further includes:
sending a second message to the relay terminal, wherein the second message carries at least one of the following: the terminal identifier of the second remote terminal and the layer-2 identifier of the second remote terminal;
wherein the second message includes the PC5-S message or the PC5-RRC message.

In some embodiments, the method further includes:
sending a third message to the relay terminal, wherein the third message is used to request to establish an end-to-end connection between the first remote terminal and the second remote terminal; wherein the third message carries at least the target identification information.

In some embodiments, the method further includes:
the target identification information is carried in a media access control (MAC) sub-header, a radio link control protocol data unit (RLC PDU) header, a packet data convergence protocol (PDCP) PDU header, or a sidelink communication relay adaptation layer protocol data unit (SRAP PDU) header corresponding to the third message.

Some embodiments of the present disclosure further provide an information transmission method performed by a relay terminal, the method includes:
sending target identification information of a second remote terminal to a first remote terminal, wherein the target identification information is used by the first remote terminal to establish an end-to-end connection with the second remote terminal through the relay terminal; wherein the target identification information includes a layer-2 identifier and/or a local identifier.

In some embodiments, sending the layer-2 identifier of the second remote terminal to the first remote terminal includes at least one of the following:
sending a relay-discovery related message to the first remote terminal, wherein the relay-discovery related message carries the layer-2 identifier of the second remote terminal, and the relay-discovery related message includes: a relay discovery announcement message and/or a relay discovery response message;
sending the layer-2 identifier of the second remote terminal to the first remote terminal during establishing a PC5-S or PC5-RRC connection with the first remote terminal and/or after establishing the PC5-S or PC5-RRC connection with the first remote terminal; wherein a quantity of the second remote terminals is one or more.

In some embodiments, sending the local identifier of the second remote terminal to the first remote terminal includes at least one of the following:
sending a relay-discovery related message to the first remote terminal, wherein the relay-discovery related message carries the local identifier of the second remote terminal, and the relay-discovery related message includes: a relay discovery announcement message and/or a relay discovery response message;
sending the local identifier of the second remote terminal to the first remote terminal during establishing a PC5-S or PC5-RRC connection with the first remote terminal and/or after establishing the PC5-S or PC5-RRC connection with the first remote terminal.

In some embodiments, sending the local identifier of the second remote terminal to the first remote terminal includes:
sending a first message to the first remote terminal, wherein the first message carries at least the local identifier of the second remote terminal; wherein the first message includes the PC5-S message or the PC5-RRC message.

In some embodiments, the first message further carries at least one of the following: a terminal identifier of the second remote terminal and a layer-2 identifier of the second remote terminal.

In some embodiments, the method further includes: receiving a second message from the first remote terminal, wherein the second message carries at least one of the following: the terminal identifier of the second remote terminal and the layer-2 identifier of the second remote terminal; the second message includes a PC5-S message or a PC5-RRC message.

In some embodiments, the method further includes:
receiving a third message from the first remote terminal, wherein the third message is used to request to establish an end-to-end connection between the first remote terminal and the second remote terminal; wherein the third message carries at least the target identification information.

In some embodiments, the target identification information is carried in a MAC sub-header, an RLC PDU header, a PDCP PDU header, or an SRAP PDU header corresponding to the third message.

In some embodiments, the method further includes: determining the second remote terminal corresponding to the third message according to the target identification information; forwarding the third message to the second remote terminal.

Some embodiments of the present disclosure further provide a terminal, wherein the terminal is a first remote terminal, and the terminal includes a memory, a transceiver, and a processor, the memory is configured to store a computer program; the transceiver is configured to send and receive data under the control of the processor; the processor is configured to read the computer program in the memory and perform the following operations:
obtaining target identification information of a second remote terminal from a relay terminal, wherein the target identification information is used by the first remote terminal to establish an end-to-end connection with the second remote terminal through the relay terminal; the target identification information includes a layer-2 identifier and/or a local identifier.

In some embodiments, the processor is configured to read the computer program in the memory to perform at least one of the following operations:
receiving a relay-discovery related message from the relay terminal, wherein the relay-discovery related message carries the layer-2 identifier of the second remote terminal, and the relay-discovery related message includes: a relay discovery announcement message and/or a relay discovery response message;
obtaining the layer-2 identifier of the second remote terminal from the relay terminal during establishing a sidelink communication interface signaling PC5-S or a sidelink communication interface radio resource control PC5-RRC connection with the relay terminal and/or after establishing the PC5-S or PC5-RRC connection with the relay terminal; wherein a quantity of the second remote terminals is one or more.

In some embodiments, the processor is configured to read the computer program in the memory to perform at least one of the following operations:
receiving a relay-discovery related message from the relay terminal, wherein the relay-discovery related message carries the local identifier of the second remote terminal, and the relay-discovery related message includes: a relay discovery announcement message and/or a relay discovery response message;
obtaining the local identifier of the second remote terminal from the relay terminal during establishing a PC5-S or PC5-RRC connection with the relay terminal and/or after establishing the PC5-S or PC5-RRC connection with the relay terminal.

In some embodiments, the processor is configured to read the computer program in the memory to perform the following operations:
receiving a first message from the relay terminal, wherein the first message carries at least the local identifier of the second remote terminal; wherein the first message includes the PC5-S message or the PC5-RRC message.

In some embodiments, the first message further carries at least one of the following: a terminal identifier of the second remote terminal and a layer-2 identifier of the second remote terminal.

In some embodiments, the processor is configured to read the computer program in the memory to further perform the following operations:
sending a second message to the relay terminal, wherein the second message carries at least one of the following: the terminal identifier of the second remote terminal and the layer-2 identifier of the second remote terminal; wherein the second message includes the PC5-S message or the PC5-RRC message.

In some embodiments, the processor is configured to read the computer program in the memory to further perform the following operations:
sending a third message to the relay terminal, wherein the third message is used to request to establish an end-to-end connection between the first remote terminal and the second remote terminal; wherein the third message carries at least the target identification information.

In some embodiments, the target identification information is carried in a media access control (MAC) sub-header, a radio link control protocol data unit (RLC PDU) header, a packet data convergence protocol (PDCP) PDU header, or a sidelink communication relay adaptation layer protocol data unit (SRAP PDU) header corresponding to the third message.

Some embodiments of the present disclosure further provide a terminal, wherein the terminal is a relay terminal, and the terminal includes a memory, a transceiver, and a processor, the memory is configured to store a computer program; the transceiver is configured to send and receive data under the control of the processor; the processor is configured to read the computer program in the memory and perform the following operations:
sending target identification information of a second remote terminal to a first remote terminal, wherein the target identification information is used by the first remote terminal to establish an end-to-end connection with the second remote terminal through the relay terminal; wherein the target identification information includes a layer-2 identifier and/or a local identifier.

In some embodiments, the processor is configured to read the computer program in the memory to perform at least one of the following operations:
sending a relay-discovery related message to the first remote terminal, wherein the relay-discovery related message carries the layer-2 identifier of the second remote terminal, and the relay-discovery related message includes: a relay discovery announcement message and/or a relay discovery response message;
sending the layer-2 identifier of the second remote terminal to the first remote terminal during establishing a PC5-S or PC5-RRC connection with the first remote terminal and/or after establishing the PC5-S or PC5-RRC connection with the first remote terminal; wherein a quantity of the second remote terminals is one or more.

In some embodiments, the processor is configured to read the computer program in the memory to perform at least one of the following operations:
sending a relay-discovery related message to the first remote terminal, wherein the relay-discovery related message carries the local identifier of the second remote terminal, and the relay-discovery related message includes: a relay discovery announcement message and/or a relay discovery response message;
sending the local identifier of the second remote terminal to the first remote terminal during establishing a PC5-S or PC5-RRC connection with the first remote terminal and/or after establishing the PC5-S or PC5-RRC connection with the first remote terminal.

In some embodiments, the processor is configured to read the computer program in the memory to perform the following operations:
sending a first message to the first remote terminal, wherein the first message carries at least the local identifier of the second remote terminal;
the first message includes the PC5-S message or the PC5-RRC message.

In some embodiments, the first message further carries at least one of the following: a terminal identifier of the second remote terminal and a layer-2 identifier of the second remote terminal.

In some embodiments, the processor is configured to read the computer program in the memory to further perform the following operations:
receiving a second message from the first remote terminal, wherein the second message carries at least one of the following: the terminal identifier of the second remote terminal and the layer-2 identifier of the second remote terminal;
the second message includes the PC5-S message or the PC5-RRC message.

In some embodiments, the processor is configured to read the computer program in the memory to further perform the following operations:
receiving a third message from the first remote terminal, wherein the third message is used to request to establish an end-to-end connection between the first remote terminal and the second remote terminal; wherein the third message carries at least the target identification information.

In some embodiments, the target identification information is carried in a MAC sub-header, an RLC PDU header, a PDCP PDU header, or an SRAP PDU header corresponding to the third message.

In some embodiments, the processor is configured to read the computer program in the memory to further perform the following operations:
determining the second remote terminal corresponding to the third message according to the target identification information;
forwarding the third message to the second remote terminal.

Some embodiments of the present disclosure further provide an information transmission apparatus applied to a first remote terminal, the apparatus includes:
an obtaining unit, configured to obtain target identification information of a second remote terminal from a relay terminal, wherein the target identification information is used by the first remote terminal to establish an end-to-end connection with the second remote terminal through the relay terminal;
the target identification information includes a layer-2 identifier and/or a local identifier.

Some embodiments of the present disclosure further provide an information transmission apparatus applied to a relay terminal, the apparatus includes:
a first sending unit, configured to send target identification information of a second remote terminal to a first remote terminal, wherein the target identification information is used by the first remote terminal to establish an end-to-end connection with the second remote terminal through the relay terminal;
the target identification information includes a layer-2 identifier and/or a local identifier.

Some embodiments of the present disclosure further provide a processor-readable storage medium, wherein the processor-readable storage medium stores a computer program, and the computer program is configured to cause a processor to execute the method according to the above.

The beneficial effects of the present disclosure are as follows:

In the foregoing solution, the layer-2 identifier and/or the local identifier of the second remote terminal that can be used to establish the end-to-end connection between the first remote terminal and the second remote terminal can be obtained from the relay terminal, so that it can be ensured that the remote terminals can smoothly establish an end-to-end connection through the relay terminal, thereby implementing end-to-end communication in the U2U Relay scenario.

### BRIEF DESCRIPTION OF THE DRAWINGS

To more clearly illustrate the technical solutions in the embodiments of the present disclosure or the related art, the following briefly describes the accompanying drawings required for describing the embodiments or the related art. Apparently, the accompanying drawings in the following description are merely some embodiments recorded in the present disclosure, and those of ordinary skill in the art may still derive other drawings from these accompanying drawings without creative efforts.
FIG. 1 is a first schematic flowchart of an information transmission method according to some embodiments of the present disclosure;
FIG. 2 is a schematic flowchart of Application Case 1;
FIG. 3 is a schematic flowchart of Application Case 3;
FIG. 4 is a second schematic flowchart of an information transmission method according to some embodiments of the present disclosure;
FIG. 5 is a first schematic diagram of units of an information transmission apparatus according to some embodiments of the present disclosure;
FIG. 6 is a structural diagram of a terminal according to some embodiments of the present disclosure;
FIG. 7 is a second schematic diagram of units of an information transmission apparatus according to some embodiments of the present disclosure.

### DETAILED DESCRIPTION

The technical solutions in the embodiments of the present disclosure will be clearly and completely described below with reference to the accompanying drawings in the embodiments of the present disclosure. Apparently, the described embodiments are some rather than all of the embodiments of the present disclosure. All other embodiments obtained by a person of ordinary skill in the art based on the embodiments of the present disclosure without creative efforts shall fall within the protection scope of the present disclosure.

The terms "first", "second", and the like in the specification and claims of the present disclosure are used to distinguish similar objects, and are not necessarily used to describe a specific order or sequence. It should be understood that the terms used in this way may be interchanged under appropriate circumstances, so that the embodiments of the present disclosure described herein can be implemented in an order other than those illustrated or described herein. In addition, the terms "include", "comprise", and any variations thereof are intended to cover non-exclusive inclusion. For example, a process, method, system, product, or device that includes a series of steps or units is not necessarily limited to those clearly listed steps or units, but may include other steps or units that are not clearly listed or are inherent to these processes, methods, products, or devices.

In the embodiments of the present disclosure, the term "and/or" describes an association relationship between associated objects, indicating that there may be three relationships. For example, A and/or B may indicate that A exists alone, both A and B exist, or B exists alone. The character "/" generally indicates that the associated objects are in an "or" relationship. In the embodiments of the present disclosure, the term "a plurality of" means two or more, and other quantifiers are similar thereto.

In the embodiments of the present disclosure, words such as "exemplary" or "for example" are used to represent examples, illustrations, or descriptions. Any embodiment or design scheme described as "exemplary" or "for example" in the embodiments of the present disclosure should not be construed as being more preferred or advantageous than other embodiments or design schemes. Exactly, the use of words such as "exemplary" or "for example" is intended to present a related concept in a specific manner.

The related concepts mentioned in the present disclosure are briefly described below.

Traditional wireless communication adopts a cellular network communication mode, that is, a terminal and a network device perform uplink/downlink data/control information transmission through a Uu interface.

Sidelink communication refers to a manner in which adjacent terminals can perform data transmission through a sidelink communication link (also referred to as a Sidelink or PC5 link, abbreviated as SL) within a certain distance range. The radio interface corresponding to the Sidelink is referred to as a sidelink communication interface (also referred to as a Sidelink interface, a PC5 interface, or a bypass interface).

To extend the coverage of the sidelink communication interface, the Third Generation Partnership Project (3GPP) Release-18 (Rel-18) introduces UE-to-UE relay (also referred to as U2U relay). The U2U relay is a terminal with a relay function, and the interfaces used between the U2U relay and remote UEs are all sidelink communication interfaces. For ease of description, the first remote terminal may be referred to as a Source Remote UE, i.e., the remote terminal that initiates end-to-end connection establishment, and the second remote terminal may be referred to as a Target Remote UE or an End Remote UE, i.e., the communication peer with which the first remote terminal establishes an end-to-end connection through the relay.

U2U Relay discovery may have two modes: Model A and Model B.

Under Model A, the U2U Relay UE sends a discovery announcement. Optionally, a premise of this process is that the Relay UE has found some End Remote UEs through a discovery process. At this time, the Relay UE may send an announcement message carrying a list of End Remote UEs that the U2U Relay UE can connect to.

Under Model B, a Discoverer UE (User Equipment) actively sends a Discovery Solicitation message to find a Discoveree UE; the Discoveree UE needs to reply to the Discoverer UE after receiving the message. Then, the Discoverer UE establishes a communication connection with the Discoveree UE. Applied to the U2U Relay scenario, the first remote terminal and/or the second remote terminal may serve as the Discoverer UE, and the U2U Relay UE may serve as the Discoveree UE. After the first remote terminal (i.e., the Source Remote UE) receives the response message from the Relay UE, the response message only contains the user info identifier (ID) of the second remote terminal (i.e., the End Remote UE).

The embodiments of the present disclosure are described below with reference to the accompanying drawings. The information transmission method, apparatus, and terminal provided in the embodiments of the present disclosure may be applied to a wireless communication system. The wireless communication system may be a system adopting the fifth-generation (5G) mobile communication technology (hereinafter referred to as a 5G system for short). Those skilled in the art may understand that the 5G New Radio (NR) system is merely an example and not a limitation.

The embodiments of the present disclosure provide an information transmission method, an apparatus, and a terminal, to achieve the purpose of smoothly establishing an end-to-end connection between a first remote terminal and a second remote terminal through a relay terminal.

The method and the apparatus are based on the same application concept. Since the principles of solving problems by the method and the apparatus are similar, the implementation of the apparatus and the method may be referred to each other, and repeated parts are not described again.

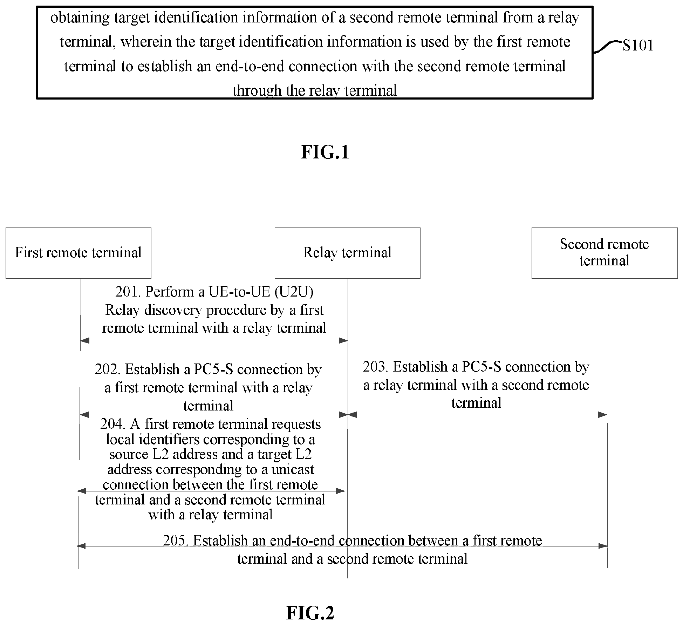

As shown in FIG. 1, an embodiment of the present disclosure provides an information transmission method performed by a first remote terminal, including following steps.

Step S101: obtain target identification information of a second remote terminal from a relay terminal, where the target identification information is used by the first remote terminal to establish an end-to-end connection with the second remote terminal through the relay terminal.

The target identification information includes a layer-2 identifier (L2 ID) and/or a local identifier; in some embodiments, the local identifier, i.e., Local ID, may be a local identifier corresponding to a L2 ID of the second remote terminal; it should be noted that the local identifier in the embodiments of the present disclosure refers to an identifier that can identify the second remote terminal within a certain geographic area. The main purpose of introducing the local identifier is that the L2 ID has too large overhead, so a local identifier with fewer bits corresponding to the L2 ID is introduced. The specific design of the local identifier may have various schemes, such as intercepting the lower 8 bits of the L2 ID. The manner of obtaining the local identifier is not limited in the present disclosure.

In some embodiments, the first remote terminal refers to an initiator of end-to-end connection establishment, i.e., a Source Remote UE; the second remote terminal refers to an End Remote UE or a Target Remote UE. The L2 ID of the second remote terminal is the Source L2 ID of the second remote terminal for itself, and is the Destination L2 ID used by the first remote terminal when sending end-to-end signaling and/or data to the second remote terminal. Further, the L2 ID of the second remote terminal may be the L2 ID used in the discovery process or the L2 ID used in the communication process.

It should be noted that by obtaining the layer-2 identifier and/or the local identifier of the second remote terminal from the relay terminal, which can be used to establish the end-to-end connection between the first remote terminal and the second remote terminal, it can be ensured that the remote terminals can smoothly establish the end-to-end connection through the relay terminal, thereby implementing end-to-end communication in the U2U Relay scenario.

In some embodiments, in an implementation manner, after obtaining the target identification information of the second remote terminal from the relay terminal, the method further includes: sending a third message to the relay terminal, where the third message is used to request to establish an end-to-end connection between the first remote terminal and the second remote terminal; the third message carries at least the target identification information.

In other words, after obtaining the target identification information, the first remote terminal can establish the end-to-end connection between the first remote terminal and the second remote terminal through the relay terminal. That is, the first remote terminal needs to first send a third message to the relay terminal, and the relay terminal forwards the third message to the second remote terminal, so as to establish the end-to-end connection between the first remote terminal and the second remote terminal.

In some embodiments, in an implementation manner, the target identification information is carried in a media access control (MAC) sub-header, a radio link control protocol data unit (RLC PDU) header, a packet data convergence protocol (PDCP) PDU header, or a sidelink communication relay adaptation layer protocol data unit (SRAP PDU) header corresponding to the third message.

It should also be noted that if the first remote terminal only obtains the L2 ID of the second remote terminal, the first remote terminal may enable the L2 ID to be carried in the MAC sub-header, RLC PDU header, PDCP PDU header, or SRAP PDU header corresponding to the third message to establish the end-to-end connection; if the first remote terminal only obtains the local identifier of the second remote terminal, the first remote terminal may enable the local identifier to be carried in the MAC sub-header, RLC PDU header, PDCP PDU header, or SRAP PDU header corresponding to the third message to establish the end-to-end connection; if the first remote terminal obtains both the L2 ID and the local identifier of the second remote terminal, usually, the first remote terminal may enable only the local identifier to be carried in the MAC sub-header, RLC PDU header, PDCP PDU header, or SRAP PDU header corresponding to the third message to establish the end-to-end connection, which has the advantage of small overhead of the third message. Of course, in this case, the first remote terminal is also allowed to only carry the L2 ID or both the L2 ID and the local identifier in the MAC sub-header, RLC PDU header, PDCP PDU header, or SRAP PDU header corresponding to the third message.

In some embodiments, in an implementation manner, obtaining the layer-2 identifier of the second remote terminal from the relay terminal includes at least one of the following A11-A12.

A11. receiving a relay-discovery related message from the relay terminal, where the relay-discovery related message carries the layer-2 identifier of the second remote terminal;
In some embodiments, the relay-discovery related message includes: a relay discovery announcement message (which may also be referred to as a U2U Relay discovery announcement message) and/or a relay discovery response message (Relay discovery response).

It should be noted that the relay discovery announcement refers to a message from the relay terminal to the first remote terminal under Model A. In some embodiments, the relay terminal enables the L2 ID of the second remote terminal to be carried through a sidelink communication interface discovery message (PROSE PC5 DISCOVERY message) corresponding to the relay discovery announcement. The relay discovery response refers to a message from the relay terminal to the first remote terminal under Model B. In some embodiments, the relay terminal enables the L2 ID of the second remote terminal to be carried through the PROSE PC5 DISCOVERY message corresponding to the Relay discovery response.

A12. obtaining the layer-2 identifier of the second remote terminal from the relay terminal during establishing a sidelink communication interface signaling (PC5-S) or a sidelink communication interface radio resource control (PC5-RRC) connection with the relay terminal and/or after establishing the PC5-S or PC5-RRC connection with the relay terminal.

It should be noted that the first remote terminal may obtain the layer-2 identifier by receiving a PC5-S message or a PC5-RRC message from the relay terminal during establishing the PC5-S or PC5-RRC connection with the relay terminal; the first remote terminal may also obtain the layer-2 identifier by receiving a PC5-S message or a PC5-RRC message from the relay terminal after establishing the PC5-S or PC5-RRC connection with the relay terminal.

It should be noted that a quantity of the second remote terminals in the foregoing A11 and A12 includes one or more.

In some embodiments, in an implementation manner, obtaining the local identifier of the second remote terminal from the relay terminal includes at least one of the following:
B11. receiving the relay-discovery related message from the relay terminal, where the relay-discovery related message carries the local identifier of the second remote terminal;
In some embodiments, the relay-discovery related message includes: a relay discovery announcement message and/or a relay discovery response message.

B12. obtaining the local identifier of the second remote terminal from the relay terminal during establishing a PC5-S or PC5-RRC connection with the relay terminal and/or after establishing the PC5-S or PC5-RRC connection with the relay terminal.

Further, in an implementation manner, the obtaining the local identifier of the second remote terminal from the relay terminal includes: receiving a first message from the relay terminal, where the first message carries at least the local identifier of the second remote terminal;
The first message includes a PC5-S message or a PC5-RRC message.

It can be understood that the first remote terminal may obtain the local identifier by receiving a PC5-S message or a PC5-RRC message from the relay terminal during establishing the PC5-S or PC5-RRC connection with the relay terminal; the first remote terminal may also obtain the local identifier by receiving a PC5-S message or a PC5-RRC message from the relay terminal after establishing the PC5-S or PC5-RRC connection with the relay terminal.

It should be noted that if the relay terminal only feeds back the local identifier of one second remote terminal to the first remote terminal, the first message may only carry the local identifier of the second remote terminal; if the relay terminal feeds back the local identifiers of multiple second remote terminals to the first remote terminal, to enable the first remote terminal to clearly know which terminals the local identifiers correspond to, in some embodiments, in an implementation manner, the first message further carries at least one of the following: a terminal identifier of the second remote terminal and a layer-2 identifier of the second remote terminal.

In some embodiments, the first remote terminal needs to request the local identifier from the relay terminal. In an implementation manner, before obtaining the local identifier of the second remote terminal from the relay terminal, the method further includes: sending a second message to the relay terminal, where the second message carries at least one of the following: the terminal identifier of the second remote terminal and the layer-2 identifier of the second remote terminal; the second message includes a PC5-S message or a PC5-RRC message.

It should be noted that the second message is used to request the local identifier of the second remote terminal.

It should be noted that for the first remote terminal, if it can obtain the L2 ID of the second remote terminal, the first remote terminal enable the L2 ID of the second remote terminal to be carried in the second message when obtaining the local identifier, so that the relay terminal may also enable the L2 ID to be carried in the fed-back first message; if the first remote terminal does not obtain the L2 ID of the second remote terminal, the first remote terminal enables the terminal identifier of the second remote terminal to be carried in the second message when obtaining the local identifier, and the relay terminal may also enable the terminal identifier to be carried in the fed-back first message. In some embodiments, the terminal identifier may be a user info ID.

Specific application examples of the embodiments of the present disclosure are described below.

Application Case 1: the first remote terminal needs to obtain the local identifier corresponding to the L2 ID of the second remote terminal. When the first remote terminal sends a request for establishing an end-to-end connection between the first remote terminal and the second remote terminal to the relay terminal, the local identifier is carried through the SRAP PDU header for the relay terminal to determine the second remote terminal, and the L2 ID is obtained during the relay discovery process.

As shown in FIG. 2, the specific implementation process includes following steps.

Step 201: the first remote terminal and the relay terminal perform a terminal-to-terminal relay discovery (U2U Relay discovery) process.

The first remote terminal obtains the L2 ID corresponding to the second remote terminal through this process.

If the U2U Relay discovery uses Model A, the relay terminal sends a U2U Relay discovery announcement message to the first remote terminal, and the specific U2U Relay discovery announcement message is a PROSE PC5 DISCOVERY message. Under Model A, the relay terminal may enable the L2 ID of the second remote terminal to be carried in the U2U Relay discovery announcement (i.e., the PROSE PC5 DISCOVERY message).

If the U2U Relay discovery uses Model B, that is, the first remote terminal sends a solicitation to the relay terminal, and the specific message corresponding to the solicitation is a PROSE PC5 DISCOVERY message. The relay terminal receives the solicitation message from the first remote terminal, forwards the solicitation message to the second remote terminal, the second remote terminal that receives the solicitation message replies a response message to the relay terminal, and the relay terminal then replies a response message to the first remote terminal, i.e., a relay discovery response message. The relay discovery response message carries the L2 ID of the second remote terminal.

A quantity of the second remote terminals may be one or more. If a quantity of the second remote terminal is one, only the L2 ID of the second remote terminal may be carried; if a quantity of the second remote terminals is multiple, the L2 IDs of the multiple second remote terminals may be carried. The L2 ID of the second remote terminal is the Source L2 ID of the second remote terminal for itself, and is the Destination L2 ID used by the first remote terminal when sending end-to-end signaling and/or data to the second remote terminal.

Step 202: the first remote terminal and the relay terminal establish a PC5-S connection.

In Step 201, the first remote terminal can obtain the L2 ID of the relay terminal by receiving the U2U Relay discovery announcement message from the relay terminal or the relay discovery response message corresponding to the U2U Relay solicitation.

The first remote terminal performs relay terminal selection, for example, selecting the relay terminal with the best channel quality according to the PC5 channel quality between the first remote terminal and the relay terminal, or randomly selecting one relay terminal as the target relay terminal from the relay terminals whose PC5 channel quality with the first remote terminal is higher than a first threshold.

After determining the target relay terminal, the first remote terminal may send a Direct Communication Request (DCR) message to the target relay terminal to request to establish a PC5-S connection between the first remote terminal and the relay terminal. The source address carried in the MAC sub-header of the DCR message is the L2 ID of the first remote terminal (the L2 ID of the first remote terminal is 24 bits, and the MAC sub-header may only include a part of the L2 ID, such as the first 16 bits of the 24 bits) and the L2 ID of the relay terminal (the L2 ID of the relay terminal is 24 bits, and the MAC sub-header may only include a part of the L2 ID, such as the first 8 bits of the 24 bits). The relay terminal sends a response message corresponding to the DCR message to the first remote terminal. Once this process is successfully completed, it is considered that the PC5-S connection between the first remote terminal and the relay terminal is established.

Step 203: the relay terminal and the second remote terminal establish a PC5-S connection.

Step 202 and Step 203 have no inherent order. In Step 203, the relay terminal may send a DCR message to the second remote terminal. The source address carried in the MAC sub-header of the DCR message is the L2 ID of the relay terminal (the L2 ID of the relay terminal is 24 bits, and the MAC sub-header may only include a part of the L2 ID, such as the first 16 bits of the 24 bits) and the L2 ID of the second remote terminal (the L2 ID of the second remote terminal is 24 bits, and the MAC header may only include a part of the L2 ID, such as the first 8 bits of the 24 bits). The second remote terminal sends a response message corresponding to the DCR message to the relay terminal. Once this process is successfully completed, it is considered that the PC5-S connection between the relay terminal and the second remote terminal is established.

Step 204: the first remote terminal requests the local identifiers corresponding to the source L2 address and the target L2 address corresponding to the unicast connection between the first remote terminal and the second remote terminal from the relay terminal.

In some embodiments, this Step 204 may be an independent step or combined with Step 202.

If it is an independent step, Step 204 is performed after Step 203.

The specific process is as follows: the first remote terminal may send a PC5-S message or a PC5-RRC message to the relay terminal (if combined with Step 203, the PC5-S message may be a DCR message; if it is an independent step, a new PC5-S message or PC5-RRC message may be introduced), where the PC5-S or PC5-RRC message is used to request the local identifiers corresponding to the source L2 address and the target L2 address corresponding to the unicast connection between the first remote terminal and the second remote terminal. In some embodiments, the PC5-S message or the PC5-RRC message may carry the L2 ID of the first remote terminal (i.e., the source L2 ID) and the L2 ID of the second remote terminal (i.e., the target L2 ID).

After receiving the request, the relay terminal allocates local identifiers corresponding to the L2 ID of the first remote terminal and the L2 ID of the second remote terminal. Specifically, the local identifiers corresponding to the L2 IDs may be allocated to the L2 ID of the first remote terminal and the L2 ID of the second remote terminal respectively, or a local identifier may be allocated based on a combination of the L2 ID of the first terminal and the L2 ID of the second remote terminal.

The relay terminal sends the allocated local identifier to the first remote terminal and/or the second remote terminal through a PC5-S message or a PC5-RRC message.

Step 205: establishing an end-to-end connection between the first remote terminal and the second remote terminal.

The first remote terminal sends a third message (such as an end-to-end DCR message) to the second remote terminal, where the third message is an end-to-end message used to request to establish an end-to-end connection with the second remote terminal. The third message needs to be sent to the relay terminal first, and then forwarded by the relay terminal to the second remote terminal.

The first remote terminal sends the third message to the relay terminal. The source address carried in the MAC sub-header corresponding to the third message is the L2 ID of the first remote terminal (the L2 ID of the first remote terminal is 24 bits, and the MAC header may only include a part of the L2 ID, such as the first 16 bits of the 24 bits) and the L2 ID of the relay terminal (the L2 ID of the relay terminal is 24 bits, and the MAC sub-header may only include a part of the L2 ID, such as the first 8 bits of the 24 bits). In addition, to enable the relay terminal to determine which remote terminal the message needs to be forwarded to after receiving the message, the SRAP PDU header corresponding to the third message carries the local identifier of the second remote terminal allocated in Step 204 or simultaneously carries the local identifier of the first remote terminal and the local identifier of the second remote terminal.

The relay terminal determines the target second remote terminal according to the local identifier of the second remote terminal carried in the SRAP PDU header, and then determines the PC5 RLC channel used when forwarding to the second remote terminal, according to the mapping relationship between the sidelink communication interface radio link control channel (PC5 RLC channel) between the first remote terminal and the relay terminal and the PC5 RLC channel between the relay terminal and the second remote terminal.

After receiving the message from the relay terminal, the second remote terminal replies a response message to the first remote terminal through the relay terminal, so that the end-to-end connection between the first remote terminal and the second remote terminal can be established.

Application Case 2: the first remote terminal needs to obtain the local identifier corresponding to the L2 ID of the second remote terminal. When the first remote terminal sends a request for establishing an end-to-end connection between the first remote terminal and the second remote terminal to the relay terminal, the local identifier is carried through the SRAP PDU header for the relay terminal to determine the second remote terminal, and the L2 ID is obtained during or after the process of establishing the PC5-S connection between the first remote terminal and the relay terminal.

The specific implementation process includes following.

Step 211: the first remote terminal and the relay terminal perform a U2U Relay discovery process.

If the U2U Relay discovery uses Model A, the relay terminal sends a U2U Relay discovery announcement message to the first remote terminal, and the specific message corresponding to the U2U Relay discovery announcement is a PROSE PC5 DISCOVERY message.

If the U2U Relay discovery uses Model B, that is, the first remote terminal sends a solicitation to the relay terminal, and the specific message corresponding to the solicitation is a PROSE PC5 DISCOVERY message. The relay terminal receives the solicitation message from the first remote terminal, forwards the solicitation message to the second remote terminal, the second remote terminal that receives the solicitation message replies a response message to the relay terminal, and the relay terminal then replies a response message to the first remote terminal. Of course, if the relay terminal stores the information of the second remote terminal, the process of forwarding the solicitation message and the process of receiving the response message from the second remote terminal may also be omitted.

Step 212: the first remote terminal and the relay terminal establish a PC5-S connection.

In Step 211, the first remote terminal can obtain the L2 ID of the relay terminal by receiving the U2U Relay discovery announcement message or the response message corresponding to the U2U Relay solicitation from the relay terminal.

The first remote terminal performs relay terminal selection, for example, selecting the relay terminal with the best channel quality as the target relay terminal according to the PC5 channel quality between the first remote terminal and the relay terminal, or randomly selecting one relay terminal as the target relay terminal from the relay terminals whose PC5 channel quality between the relay terminal and the first remote terminal is higher than a first threshold. After determining the target relay terminal, the first remote terminal may send a DCR message to the target relay terminal to request to establish a PC5-S connection between the first remote terminal and the relay terminal. The source address carried in the MAC sub-header of the DCR message is the L2 ID of the first remote terminal (the L2 ID of the first remote terminal is 24 bits, and the MAC sub-header may only include a part of the L2 ID, such as the first 16 bits of the 24 bits) and the L2 ID of the relay terminal (the L2 ID of the relay terminal is 24 bits, and the MAC sub-header may only include a part of the L2 ID, such as the first 8 bits of the 24 bits). The relay terminal sends a response message corresponding to the DCR message to the first remote terminal. Once this process is successfully completed, it is considered that the PC5-S connection between the first remote terminal and the relay terminal is established.

In some embodiments, the first remote terminal may obtain the L2 ID of the second remote terminal from the relay terminal during establishing the PC5-S and/or PC5-RRC connection with the relay terminal; or the first remote terminal obtains the L2 ID of the second remote terminal from the relay terminal after establishing the PC5-S and/or PC5-RRC connection with the relay terminal.

For example, if the L2 ID of the second remote terminal is obtained from the relay terminal during the establishment of the PC5-S and/or PC5-RRC connection, the response message corresponding to the DCR message may carry the L2 ID of the second remote terminal. If the L2 ID of the second remote terminal is obtained from the relay terminal after the establishment of the PC5-S and/or PC5-RRC connection, specifically, a new PC5-RRC and/or PC5-S message may be introduced in the sidelink communication interface, and the new PC5-RRC and/or PC5-S message may be used to request the L2 ID of the second remote terminal.

Step 213: the relay terminal and the second remote terminal establish a PC5-S connection.

Step 212 and Step 213 have no inherent order. In Step 213, the relay terminal may send a DCR message to the second remote terminal. The source address carried in the MAC sub-header of the DCR message is the L2 ID of the relay terminal (the L2 ID of the relay terminal is 24 bits, and the MAC sub-header may only include a part of the L2 ID, such as the first 16 bits of the 24 bits) and the L2 ID of the second remote terminal (the L2 ID of the second remote terminal is 24 bits, and the MAC header may only include a part of the L2 ID, such as the first 8 bits of the 24 bits). The second remote terminal sends a response message corresponding to the DCR message to the relay terminal. Once this process is successfully completed, it is considered that the PC5-S connection between the relay terminal and the second remote terminal is established.

Step 214: the first remote terminal requests the local identifiers corresponding to the source L2 address and the target L2 address corresponding to the unicast connection between the first remote terminal and the second remote terminal from the relay terminal.

The specific process is as follows: the first remote terminal may send a PC5-S message or a PC5-RRC message to the relay terminal, where the PC5-S or PC5-RRC message is used to request the local identifiers corresponding to the source L2 address and the target L2 address corresponding to the unicast connection between the first remote terminal and the second remote terminal. In some embodiments, the PC5-S message or the PC5-RRC message may carry the L2 ID of the first remote terminal (i.e., the source L2 ID) and the L2 ID of the second remote terminal (i.e., the target L2 ID).

After receiving the request, the relay terminal allocates a local identifier corresponding to the L2 ID of the first remote terminal and the L2 ID of the second remote terminal. Specifically, the local identifiers corresponding to the L2 IDs may be allocated to the L2 ID of the first remote terminal and the L2 ID of the second remote terminal respectively, or a local identifier may be allocated based on a combination of the L2 ID of the first terminal and the L2 ID of the second remote terminal.

The relay terminal sends the allocated local identifier to the first remote terminal and/or the second remote terminal through a PC5-S message or a PC5-RRC message.

Step 215: an end-to-end connection is established between the first remote terminal and the second remote terminal.

The first remote terminal sends a third message (such as an end-to-end DCR message) to the second remote terminal, where the third message is an end-to-end message used to request to establish an end-to-end connection with the second remote terminal. The third message needs to be sent to the relay terminal first, and then forwarded by the relay terminal to the second remote terminal.

The first remote terminal sends the third message to the relay terminal. The source address carried in the MAC sub-header corresponding to the third message is the L2 ID of the first remote terminal (the L2 ID of the first remote terminal is 24 bits, and the MAC sub-header may only include a part of the L2 ID, such as the first 16 bits of the 24 bits) and the L2 ID of the relay terminal (the L2 ID of the relay terminal is 24 bits, and the MAC sub-header may only include a part of the L2 ID, such as the first 8 bits of the 24 bits). In addition, to enable the relay terminal to determine which remote terminal the message needs to be forwarded to after receiving the message, the SRAP PDU header corresponding to the third message carries the local identifier of the second remote terminal allocated in Step 214 or simultaneously carries the local identifier of the first remote terminal and the local identifier of the second remote terminal.

The relay terminal determines the target second remote terminal according to the local identifier of the second remote terminal carried in the SRAP PDU header, and then determines the PC5 RLC channel used when forwarding to the second remote terminal, according to the mapping relationship between the PC5 RLC channel between the first remote terminal and the relay terminal and the PC5 RLC channel between the relay terminal and the second remote terminal.

After receiving the message from the relay terminal, the second remote terminal replies a response message to the first remote terminal through the relay terminal, so that the end-to-end connection between the first remote terminal and the second remote terminal can be established.

Application Case 3: the first remote terminal needs to obtain the L2 ID of the second remote terminal. When the first remote terminal sends a request for establishing an end-to-end connection between the first remote terminal and the second remote terminal to the relay terminal, the L2 ID of the second remote terminal is carried in the UP protocol layer header for the relay terminal to determine the second remote terminal, and the L2 ID is obtained during the relay discovery process.

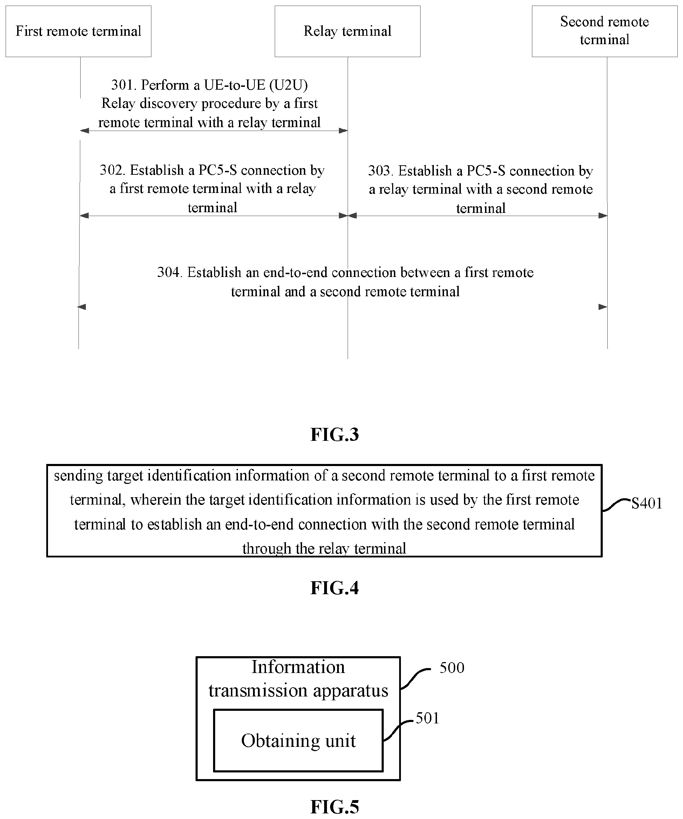

As shown in FIG. 3, the specific implementation process includes:
Step 301: the first remote terminal and the relay terminal perform a U2U Relay discovery process.

The first remote terminal obtains the L2 ID corresponding to the second remote terminal through this process.

If the U2U Relay discovery uses Model A, the Relay UE sends a U2U Relay discovery announcement message to the first remote terminal, and the specific message corresponding to the U2U Relay discovery announcement is a PROSE PC5 DISCOVERY message. Under Model A, the relay terminal may carry the L2 ID of the second remote terminal in the U2U Relay discovery announcement (i.e., the PROSE PC5 DISCOVERY message).

If the U2U Relay discovery uses Model B, that is, the first remote terminal sends a solicitation to the relay terminal, and the specific message corresponding to the solicitation is a PROSE PC5 DISCOVERY message. The relay terminal receives the solicitation message from the first remote terminal, forwards the solicitation message to the second remote terminal, the second remote terminal that receives the solicitation message replies a response message to the relay terminal, and the relay terminal then replies a response message to the first remote terminal, i.e., a relay discovery response message. The relay discovery response message carries the L2 ID of the second remote terminal.

A quantity of the second remote terminals may be one or more. If a quantity of the second remote terminals is one, only the L2 ID of the second remote terminal may be carried; if a quantity of the second remote terminals is multiple, the L2 IDs of the multiple second remote terminals may be carried. The L2 ID of the second remote terminal is the Source L2 ID of the second remote terminal for itself, and is the Destination L2 ID used by the first remote terminal when sending end-to-end signaling and/or data to the second remote terminal.

Step 302: the first remote terminal and the relay terminal establish a PC5-S connection.

In Step 301, the first remote terminal can obtain the L2 ID of the relay terminal by receiving the U2U Relay discovery announcement message or the relay discovery response message corresponding to the U2U Relay solicitation from the relay terminal.

The first remote terminal performs relay terminal selection, for example, selecting the relay terminal with the best channel quality according to the PC5 channel quality between the first remote terminal and the relay terminal, or randomly selecting one relay terminal as the target relay terminal from the relay terminals with PC5 channel quality between the relay terminals and the first remote terminal being higher than a first threshold.

After determining the target relay terminal, the first remote terminal may send a DCR message to the target relay terminal to request to establish a PC5-S connection between the first remote terminal and the relay terminal. The source address carried in the MAC sub-header of the DCR message is the L2 ID of the first remote terminal (the L2 ID of the first remote terminal is 24 bits, and the MAC sub-header may only include a part of the L2 ID, such as the first 16 bits of the 24 bits) and the L2 ID of the relay terminal (the L2 ID of the relay terminal is 24 bits, and the MAC sub-header may only include a part of the L2 ID, such as the first 8 bits of the 24 bits). The relay terminal sends a response message corresponding to the DCR message to the first remote terminal. Once this process is successfully completed, it is considered that the PC5-S connection between the first remote terminal and the relay terminal is established.

Step 303: the relay terminal and the second remote terminal establish a PC5-S connection.

Step 302 and Step 303 have no inherent order. In Step 303, the relay terminal may send a DCR message to the second remote terminal. The source address carried in the MAC sub-header of the DCR message is the L2 ID of the relay terminal (the L2 ID of the relay terminal is 24 bits, and the MAC sub-header may only include a part of the L2 ID, such as the first 16 bits of the 24 bits) and the L2 ID of the second remote terminal (the L2 ID of the second remote terminal is 24 bits, and the MAC sub-header may only include a part of the L2 ID, such as the first 8 bits of the 24 bits). The second remote terminal sends a response message corresponding to the DCR message to the relay terminal. Once this process is successfully completed, it is considered that the PC5-S connection between the relay terminal and the second remote terminal is established.

Step 304: establish an end-to-end connection between the first remote terminal and the second remote terminal.

The first remote terminal sends a third message (such as an end-to-end DCR message) to the second remote terminal, where the third message is an end-to-end message used to request to establish an end-to-end connection with the second remote terminal. The third message needs to be sent to the relay terminal first, and then forwarded by the relay terminal to the second remote terminal.

The first remote terminal sends the third message to the relay terminal. The source address carried in the MAC sub-header corresponding to the third message is the L2 ID of the first remote terminal (the L2 ID of the first remote terminal is 24 bits, and the MAC sub-header may only include a part of the L2 ID, such as the first 16 bits of the 24 bits) and the L2 ID of the relay terminal (the L2 ID of the relay terminal is 24 bits, and the MAC sub-header may only include a part of the L2 ID, such as the first 8 bits of the 24 bits). In addition, to enable the relay terminal to determine which remote terminal the message needs to be forwarded to after receiving the message, the MAC sub-header, RLC header, PDCP PDU header, or SRAP PDU header corresponding to the third message further carries the L2 ID corresponding to the second remote terminal.

After receiving the third message, the relay terminal determines the target second remote terminal according to the L2 ID corresponding to the second remote terminal carried in the MAC sub-header, RLC PDU header, PDCP PDU header, or SRAP PDU header corresponding to the third message, and then determines the PC5 RLC channel used when forwarding to the second remote terminal, according to the mapping relationship between the PC5 RLC channel between the first remote terminal and the relay terminal and the PC5 RLC channel between the relay terminal and the second remote terminal.

After receiving the third message from the relay terminal, the second remote terminal replies a response message to the first remote terminal through the relay terminal, so that the end-to-end connection between the first remote terminal and the second remote terminal can be established.

Application Case 4: the first remote terminal needs to obtain the L2 ID of the second remote terminal. When the first remote terminal sends a request for establishing an end-to-end connection between the first remote terminal and the second remote terminal to the relay terminal, the L2 ID of the second remote terminal is carried in the UP protocol layer header for the relay terminal to determine the second remote terminal, and the L2 ID is obtained during or after the process of establishing the PC5-S connection between the first remote terminal and the relay terminal.

The specific implementation process includes following steps.

Step 311: the first remote terminal and the relay terminal perform a U2U Relay discovery process.

If the U2U Relay discovery uses Model A, the relay terminal sends a U2U Relay discovery announcement message to the first remote terminal, and the specific message corresponding to the U2U Relay discovery announcement is a PROSE PC5 DISCOVERY message.

If the U2U Relay discovery uses Model B, that is, the first remote terminal sends a solicitation to the relay terminal, and the specific message corresponding to the solicitation is a PROSE PC5 DISCOVERY message. The relay terminal receives the solicitation message from the first remote terminal, forwards the solicitation message to the second remote terminal, the second remote terminal that receives the solicitation message replies a response message to the relay terminal, and the relay terminal then replies a response message to the first remote terminal.

Step 312: the first remote terminal and the relay terminal establish a PC5-S connection.

In Step 311, the first remote terminal can obtain the L2 ID of the relay terminal by receiving the U2U Relay discovery announcement message from the relay terminal or the response message corresponding to the U2U Relay solicitation.

The first remote terminal performs relay terminal selection, for example, selecting the relay terminal with the best channel quality according to the PC5 channel quality between the first remote terminal and the relay terminal, or randomly selecting one relay terminal as the target relay terminal from the relay terminals whose PC5 channel quality with the first remote terminal is higher than a first threshold.

After determining the target relay terminal, the first remote terminal may send a DCR message to the target relay terminal to request to establish a PC5-S connection between the first remote terminal and the relay terminal. The source address carried in the MAC sub-header of the DCR message is the L2 ID of the first remote terminal (the L2 ID of the first remote terminal is 24 bits, and the MAC sub-header may only include a part of the L2 ID, such as the first 16 bits of the 24 bits) and the L2 ID of the relay terminal (the L2 ID of the relay terminal is 24 bits, and the MAC sub-header may only include a part of the L2 ID, such as the first 8 bits of the 24 bits). The relay terminal sends a response message corresponding to the DCR message to the first remote terminal. Once this process is successfully completed, it is considered that the PC5-S connection between the first remote terminal and the relay terminal is established.

In some embodiments: the first remote terminal may obtain the L2 ID of the second remote terminal from the relay terminal during establishing the PC5-S and/or PC5-RRC connection with the relay terminal; or the first remote terminal obtains the L2 ID of the second remote terminal from the relay terminal after establishing the PC5-S and/or PC5-RRC connection with the relay terminal.

For example, if the L2 ID of the second remote terminal is obtained from the relay terminal during the establishment of the PC5-S and/or PC5-RRC connection, the response message corresponding to the DCR message may carry the L2 ID of the second remote terminal. If the L2 ID of the second remote terminal is obtained from the relay terminal after the establishment of the PC5-S and/or PC5-RRC connection, specifically, a new PC5-RRC and/or PC5-S message may be introduced in the sidelink communication interface, and the new PC5-RRC and/or PC5-S message may be used to request the L2 ID of the second remote terminal.

Step 313: the relay terminal and the second remote terminal establish a PC5-S connection.

Step 312 and Step 313 have no inherent order therebetween. In Step 313, the relay terminal may send a DCR message to the second remote terminal. The source address carried in the MAC sub-header of the DCR message is the L2 ID of the relay terminal (the L2 ID of the relay terminal is 24 bits, and the MAC sub-header may only include a part of the L2 ID, such as the first 16 bits of the 24 bits) and the L2 ID of the second remote terminal (the L2 ID of the second remote terminal is 24 bits, and the MAC sub-header may only include a part of the L2 ID, such as the first 8 bits of the 24 bits). The second remote terminal sends a response message corresponding to the DCR message to the relay terminal. Once this process is successfully completed, it is considered that the PC5-S connection between the relay terminal and the second remote terminal is established.

Step 314: establish an end-to-end connection between the first remote terminal and the second remote terminal.

The first remote terminal sends a third message (such as an end-to-end DCR message) to the second remote terminal, where the third message is an end-to-end message used to request to establish an end-to-end connection with the second remote terminal. The third message needs to be sent to the relay terminal first, and then forwarded by the relay terminal to the second remote terminal.

The first remote terminal sends the third message to the relay terminal. The source address carried in the MAC sub-header corresponding to the third message is the L2 ID of the first remote terminal (the L2 ID of the first remote terminal is 24 bits, and the MAC header may only include a part of the L2 ID, such as the first 16 bits of the 24 bits) and the L2 ID of the relay terminal (the L2 ID of the relay terminal is 24 bits, and the MAC sub-header may only include a part of the L2 ID, such as the first 8 bits of the 24 bits). In addition, to enable the relay terminal to determine which remote terminal the message needs to be forwarded to after receiving the message, the MAC sub-header, RLC header, PDCP PDU header, or SRAP PDU header corresponding to the third message further carries the L2 ID corresponding to the second remote terminal.

After receiving the third message, the relay terminal determines the target second remote terminal according to the L2 ID corresponding to the second remote terminal carried in the MAC sub-header, RLC PDU header, PDCP PDU header, or SRAP PDU header corresponding to the third message, and then determines the PC5 RLC channel used when forwarding to the second remote terminal according to the mapping relationship between the PC5 RLC channel between the first remote terminal and the relay terminal and the PC5 RLC channel between the relay terminal and the second remote terminal.

After receiving the message from the relay terminal, the second remote terminal replies a response message to the first remote terminal through the relay terminal, so that the end-to-end connection between the first remote terminal and the second remote terminal can be established.

Application Case 5: the first remote terminal obtains the local identifier of the second remote terminal through discovery or the process of establishing a PC5-S or PC5-RRC connection between the first remote terminal and the relay terminal. When the first remote terminal sends a request for establishing an end-to-end connection between the first remote terminal and the second remote terminal to the relay terminal, the local identifier is carried through the SRAP PDU header for the relay terminal to determine the second remote terminal.

The specific implementation process includes following steps.

Step 401: the first remote terminal and the relay terminal perform a U2U Relay discovery process.

If the U2U Relay discovery uses Model A, the relay terminal sends a U2U Relay discovery announcement message to the first remote terminal, and the specific message corresponding to the U2U Relay discovery announcement is a PROSE PC5 DISCOVERY message.

If the U2U Relay discovery uses Model B, that is, the first remote terminal sends a solicitation to the relay terminal, and the specific message corresponding to the solicitation is a PROSE PC5 DISCOVERY message. The relay terminal receives the solicitation message from the first remote terminal, forwards the solicitation message to the second remote terminal, the second remote terminal that receives the solicitation message replies a response message to the relay terminal, and the relay terminal then replies a response message to the first remote terminal.

A quantity of the second remote terminals may be one or more.

In some embodiments, if a quantity of the second remote terminals is one, only the terminal identifier of the second remote terminal and/or the local identifier of the second remote terminal may be carried; if a quantity of the second remote terminals is multiple, the terminal identifiers of the multiple second remote terminals and/or the local identifiers of the second remote terminals may be carried. The local identifier of the second remote terminal is the local identifier corresponding to the Source L2 ID of the second remote terminal for itself, and is the local identifier corresponding to the Destination L2 ID used by the first remote terminal when sending end-to-end signaling/data to the second remote terminal.

In Step 401, the allocation of the local identifier of the second remote terminal is optional. If no local identifier is allocated in Step 401, the local identifier of the second remote terminal may also be allocated in Step 402. Of course, if the local identifier of the second remote terminal is allocated in Step 401, the process of allocating the local identifier to the second remote terminal in Step 402 may also be omitted.

Step 402: the first remote terminal and the relay terminal establish a PC5-S connection.

The first remote terminal performs relay terminal selection, for example, selecting the relay terminal with the best channel quality according to the PC5 channel quality between the first remote terminal and the relay terminal, or randomly selecting one relay terminal as the target relay terminal from the relay terminals whose PC5 channel quality with the first remote terminal is higher than a first threshold.

After determining the target relay terminal, the first remote terminal may send a DCR message to the target relay terminal to request to establish a PC5-S connection between the first remote terminal and the relay terminal. The source address carried in the MAC sub-header of the DCR message is the L2 ID of the first remote terminal (the L2 ID of the first remote terminal is 24 bits, and the MAC sub-header may only include a part of the L2 ID, such as the first 16 bits of the 24 bits) and the L2 ID of the relay terminal (the L2 ID of the relay terminal is 24 bits, and the MAC sub-header may only include a part of the L2 ID, such as the first 8 bits of the 24 bits). The relay terminal sends a response message corresponding to the DCR message to the first remote terminal. Once this process is successfully completed, it is considered that the PC5-S connection between the first remote terminal and the relay terminal is established.

Optionally, in this step, the relay terminal may allocate a local identifier to the second remote terminal, and notify through PC5-S or PC5-RRC signaling the first remote terminal of the local identifier allocated by the relay terminal to the second remote terminal.

If the relay terminal has allocated a local identifier to the second remote terminal in Step 401, the process of allocating a local identifier to the second remote terminal in this step may be omitted.

Step 403: the relay terminal and the second remote terminal establish a PC5-S connection.

Step 402 and Step 403 have no inherent order therebetween. In Step 403, the relay terminal may send a DCR message to the second remote terminal. The source address carried in the MAC sub-header of the DCR message is the L2 ID of the relay terminal (the L2 ID of the relay terminal is 24 bits, and the MAC sub-header may only include a part of the L2 ID, such as the first 16 bits of the 24 bits) and the L2 ID of the second remote terminal (the L2 ID of the second remote terminal is 24 bits, and the MAC sub-header may only include a part of the L2 ID, such as the first 8 bits of the 24 bits). The second remote terminal sends a response message corresponding to the DCR message to the relay terminal. Once this process is successfully completed, it is considered that the PC5-S connection between the relay terminal and the second remote terminal is established.

Step 404: establish an end-to-end connection between the first remote terminal and the second remote terminal.

The first remote terminal sends a third message (such as an end-to-end DCR message) to the second remote terminal, where the third message is an end-to-end message used to request to establish an end-to-end connection with the second remote terminal. The third message needs to be sent to the relay terminal first, and then forwarded by the relay terminal to the second remote terminal.

The first remote terminal sends the third message to the relay terminal. The source address carried in the MAC sub-header corresponding to the third message is the L2 ID of the first remote terminal (the L2 ID of the first remote terminal is 24 bits, and the MAC header may only include a part of the L2 ID, such as the first 16 bits of the 24 bits) and the L2 ID of the relay terminal (the L2 ID of the relay terminal is 24 bits, and the MAC sub-header may only include a part of the L2 ID, such as the first 8 bits of the 24 bits). In addition, to enable the relay terminal to determine which remote terminal the message needs to be forwarded to after receiving the message, the SRAP PDU header corresponding to the third message carries the local identifier allocated in Step 402 or Step 401.

The relay terminal determines the target second remote terminal according to the local identifier carried in the SRAP PDU header, and then determines the PC5 RLC channel used when forwarding to the second remote terminal, according to the mapping relationship between the PC5 RLC channel between the first remote terminal and the relay terminal and the PC5 RLC channel between the relay terminal and the second remote terminal.

After receiving the message from the relay terminal, the second remote terminal replies a response message to the first remote terminal through the relay terminal, so that the end-to-end connection between the first remote terminal and the second remote terminal can be established.

### Application Case 6: the first remote terminal obtains the local identifier of the second remote terminal through the PC5-S/PC5-RRC signaling process. When the first remote terminal sends a request for establishing an end-to-end connection between the first remote terminal and the second remote terminal to the relay terminal, the local identifier is carried through the SRAP PDU header for the relay terminal to determine the second remote terminal.

The specific implementation process includes following steps.

Step 501: the first remote terminal and the relay terminal perform a U2U Relay discovery process.

If the U2U Relay discovery uses Model A, the relay terminal sends a U2U Relay discovery announcement message to the first remote terminal, and the specific message corresponding to the U2U Relay discovery announcement is a PROSE PC5 DISCOVERY message.

If the U2U Relay discovery uses Model B, that is, the first remote terminal sends a solicitation to the relay terminal, and the specific message corresponding to the solicitation is a PROSE PC5 DISCOVERY message. The relay terminal receives the solicitation message from the first remote terminal, forwards the solicitation message to the second remote terminal, the second remote terminal that receives the solicitation message replies a response message to the relay terminal, and the relay terminal then replies a response message to the first remote terminal.

A quantity of the second remote terminals may be one or more.

Step 502: the first remote terminal and the relay terminal establish a PC5-S connection.

The first remote terminal performs relay terminal selection, for example, selecting the relay terminal with the best channel quality according to the PC5 channel quality between the first remote terminal and the relay terminal, or randomly selecting one relay terminal as the target relay terminal, from the relay terminals, whose PC5 channel quality with the first remote terminal is higher than a first threshold.

After determining the target relay terminal, the first remote terminal may send a DCR message to the target relay terminal to request to establish a PC5-S connection between the first remote terminal and the relay terminal. The source address carried in the MAC sub-header of the DCR message is the L2 ID of the first remote terminal (the L2 ID of the first remote terminal is 24 bits, and the MAC sub-header may only include a part of the L2 ID, such as the first 16 bits of the 24 bits) and the L2 ID of the relay terminal (the L2 ID of the relay terminal is 24 bits, and the MAC sub-header may only include a part of the L2 ID, such as the first 8 bits of the 24 bits). The relay terminal sends a response message corresponding to the DCR message to the first remote terminal. Once this process is successfully completed, it is considered that the PC5-S connection between the first remote terminal and the relay terminal is established.

Step 503: the relay terminal and the second remote terminal establish a PC5-S connection.

Step 502 and Step 503 have no inherent order therebetween. In Step 503, the relay terminal may send a DCR message to the second remote terminal. The source address carried in the MAC sub-header of the DCR message is the L2 ID of the relay terminal (the L2 ID of the relay terminal is 24 bits, and the MAC sub-header may only include a part of the L2 ID, such as the first 16 bits of the 24 bits) and the L2 ID of the second remote terminal (the L2 ID of the second remote terminal is 24 bits, and the MAC sub-header may only include a part of the L2 ID, such as the first 8 bits of the 24 bits). The second remote terminal sends a response message corresponding to the DCR message to the relay terminal. Once this process is successfully completed, it is considered that the PC5-S connection between the relay terminal and the second remote terminal is established.

Step 504: the first remote terminal requests the source L2 address corresponding to the unicast connection between the first remote terminal and the second remote terminal and the local identifier corresponding to the target L2 address from the relay terminal.

The specific process is as follows: the first remote terminal may send a PC5-S message or a PC5-RRC message to the relay terminal, where the PC5-S or PC5-RRC message is used to request the source L2 address corresponding to the unicast connection between the first remote terminal and the second remote terminal and the local identifier corresponding to the target L2 address. In some embodiments, the PC5-S message or the PC5-RRC message may carry the L2 ID (source L2 ID) of the first remote terminal and the user identifier (such as user info ID) of the second remote terminal.

After receiving the request, the relay terminal allocates local identifiers corresponding to the L2 ID of the first remote terminal and the user identifier of the second remote terminal. Specifically, local identifiers corresponding to the L2 ID of the first remote terminal and the user identifier of the second remote terminal may be respectively allocated to the L2 ID of the first remote terminal and the user identifier of the second remote terminal, or a local identifier may be allocated based on a combination of the L2 ID of the first remote terminal and the user identifier of the second remote terminal.

The relay terminal sends the allocated local identifier to the first remote terminal and/or the second remote terminal through a PC5-S message or a PC5-RRC message.

Step 505: establish an end-to-end connection between the first remote terminal and the second remote terminal.

The first remote terminal sends a third message (such as an end-to-end DCR message) to the second remote terminal, where the third message is an end-to-end message used to request to establish an end-to-end connection with the second remote terminal. The third message needs to be sent to the relay terminal first, and then forwarded by the relay terminal to the second remote terminal.

The first remote terminal sends the third message to the relay terminal. The source address carried in the MAC sub-header corresponding to the third message is the L2 ID of the first remote terminal (the L2 ID of the first remote terminal is 24 bits, and the MAC header may only include a part of the L2 ID, such as the first 16 bits of the 24 bits) and the L2 ID of the relay terminal (the L2 ID of the relay terminal is 24 bits, and the MAC sub-header may only include a part of the L2 ID, such as the first 8 bits of the 24 bits). In addition, to enable the relay terminal to determine which remote terminal the message needs to be forwarded to after receiving the message, the SRAP PDU header corresponding to the third message carries the local identifier allocated in Step 504.

The relay terminal determines the target second remote terminal according to the local identifier carried in the SRAP PDU header, and then determines the PC5 RLC channel used when forwarding to the second remote terminal, according to the mapping relationship between the PC5 RLC channel between the first remote terminal and the relay terminal and the PC5 RLC channel between the relay terminal and the second remote terminal.

After receiving the message from the relay terminal, the second remote terminal replies a response message to the first remote terminal through the relay terminal, so that the end-to-end connection between the first remote terminal and the second remote terminal can be established.

It should be noted that, through the method provided in at least one embodiment of the present disclosure, the first remote terminal can obtain the L2 ID of the second remote terminal or the local identifier of the second remote terminal, and the first remote terminal sends the L2 ID of the second remote terminal or the local identifier of the second remote terminal to the U2U Relay UE, so that during establishing the end-to-end connection, the U2U Relay UE can determine the unique target second remote terminal, thereby ensuring the success of establishing the end-to-end connection.

The technical solutions provided in the embodiments of the present disclosure can be applied to various systems, especially 5G systems. For example, the applicable systems may be Global System for Mobile Communications (GSM) systems, Code Division Multiple Access (CDMA) systems, Wideband Code Division Multiple Access (WCDMA) General Packet Radio Service (GPRS) systems, Long Term Evolution (LTE) systems, LTE Frequency Division Duplex (FDD) systems, LTE Time Division Duplex (TDD) systems, Long Term Evolution Advanced (LTE-A) systems, Universal Mobile Telecommunications System (UMTS), Worldwide Interoperability for Microwave Access (WiMAX) systems, 5G New Radio (NR) systems, etc. Each of these systems includes a terminal (also referred to as a terminal device) and a network device. The system may further include a core network part, such as an Evolved Packet System (EPS), a 5G System (5GS), etc.

The terminal involved in the embodiments of the present disclosure may also be referred to as a terminal device, which may be a device that provides voice and/or data connectivity to a user, a handheld device with a wireless connection function, or another processing device connected to a wireless modem. In different systems, the names of terminal devices may also be different. For example, in a 5G system, the terminal device may be referred to as User Equipment (UE). The wireless terminal device can communicate with one or more Core Networks (CN) through a Radio Access Network (RAN). The wireless terminal device may be a mobile terminal device, such as a mobile phone (or referred to as a "cellular" phone) and a computer with a mobile terminal device. For example, it may be a portable, pocket-sized, handheld, computer-built-in, or vehicle-mounted mobile device that exchanges language and/or data with the radio access network. For example, devices such as Personal Communication Service (PCS) phones, cordless phones, Session Initiated Protocol (SIP) phones, Wireless Local Loop (WLL) stations, or Personal Digital Assistants (PDAs). The wireless terminal device may also be referred to as a system, a subscriber unit, a subscriber station, a mobile station, a mobile, a remote station, an access point, a remote terminal, an access terminal, a user terminal, a user agent, or a user device, which is not limited in the embodiments of the present disclosure.

As shown in FIG. 4, an embodiment of the present disclosure provides an information transmission method performed by a relay terminal, including following steps.

Step S401: send target identification information of a second remote terminal to a first remote terminal, where the target identification information is used by the first remote terminal to establish an end-to-end connection with the second remote terminal through the relay terminal;
The target identification information includes a layer-2 identifier and/or a local identifier.

In some embodiments, sending the layer-2 identifier of the second remote terminal to the first remote terminal includes at least one of the following:
sending a relay-discovery related message to the first remote terminal, where the relay-discovery related message carries the layer-2 identifier of the second remote terminal, and the relay-discovery related message includes: a relay discovery announcement message and/or a relay discovery response message;
sending the layer-2 identifier of the second remote terminal to the first remote terminal during establishing a PC5-S or PC5-RRC connection with the first remote terminal and/or after establishing the PC5-S or PC5-RRC connection with the first remote terminal; a quantity of the second remote terminals includes one or more.

In some embodiments, sending the local identifier of the second remote terminal to the first remote terminal includes at least one of the following:
sending a relay-discovery related message to the first remote terminal, where the relay-discovery related message carries the local identifier of the second remote terminal, and the relay-discovery related message includes: a relay discovery announcement message and/or a relay discovery response message;
sending the local identifier of the second remote terminal to the first remote terminal during establishing a PC5-S or PC5-RRC connection with the first remote terminal, and/or after establishing the PC5-S or PC5-RRC connection with the first remote terminal.

In some embodiments, the sending the local identifier of the second remote terminal to the first remote terminal includes:
sending a first message to the first remote terminal, where the first message carries at least the local identifier of the second remote terminal;
wherein the first message includes a PC5-S message or a PC5-RRC message.

In some embodiments, the first message further carries at least one of the following: a terminal identifier of the second remote terminal and a layer-2 identifier of the second remote terminal.

In some embodiments, the method further includes: receiving a second message from the first remote terminal, where the second message carries at least one of the following: the terminal identifier of the second remote terminal and the layer-2 identifier of the second remote terminal; the second message includes a PC5-S message or a PC5-RRC message.

In some embodiments, the method further includes: receiving a third message from the first remote terminal, where the third message is used to request to establish an end-to-end connection between the first remote terminal and the second remote terminal;

The third message carries at least the target identification information.

In some embodiments, the target identification information is carried in a MAC sub-header, an RLC PDU header, a PDCP PDU header, or an SRAP PDU header corresponding to the third message.

In some embodiments, the method further includes: determining the second remote terminal corresponding to the third message according to the target identification information; forwarding the third message to the second remote terminal.

It should be noted that all implementations in the foregoing embodiments are applicable to the embodiments of the information transmission method applied to the relay terminal side, and can also achieve the same technical effect, which will not be repeated here.

As shown in FIG. 5, an embodiment of the present disclosure provides an information transmission apparatus 500 applied to a first remote terminal, including following units:
an obtaining unit 501, configured to obtain target identification information of a second remote terminal from a relay terminal, where the target identification information is used by the first remote terminal to establish an end-to-end connection with the second remote terminal through the relay terminal; the target identification information includes a layer-2 identifier and/or a local identifier.

In some embodiments, the obtaining unit 501 is configured to implement at least one of the following:
receiving a relay-discovery related message from the relay terminal, where the relay-discovery related message carries the layer-2 identifier of the second remote terminal, and the relay-discovery related message includes: a relay discovery announcement message and/or a relay discovery response message;
obtaining the layer-2 identifier of the second remote terminal from the relay terminal during establishing a sidelink communication interface signaling PC5-S or a sidelink communication interface radio resource control PC5-RRC connection with the relay terminal, and/or after establishing the PC5-S or PC5-RRC connection with the relay terminal; a quantity of the second remote terminals includes one or more.

In some embodiments, the obtaining unit 501 is configured to implement at least one of the following:
receiving a relay-discovery related message from the relay terminal, where the relay-discovery related message carries the local identifier of the second remote terminal, and the relay-discovery related message includes: a relay discovery announcement message and/or a relay discovery response message;
obtaining the local identifier of the second remote terminal from the relay terminal during establishing a PC5-S or PC5-RRC connection with the relay terminal and/or after establishing the PC5-S or PC5-RRC connection with the relay terminal.

In some embodiments, the obtaining unit 501 is configured to:
receive a first message from the relay terminal, where the first message carries at least the local identifier of the second remote terminal; the first message includes a PC5-S message or a PC5-RRC message.

In some embodiments, the first message further carries at least one of the following: a terminal identifier of the second remote terminal and a layer-2 identifier of the second remote terminal.

In some embodiments, the apparatus further includes:
a second sending unit, configured to send a second message to the relay terminal, where the second message carries at least one of the following: the terminal identifier of the second remote terminal and the layer-2 identifier of the second remote terminal; the second message includes a PC5-S message or a PC5-RRC message.

In some embodiments, the apparatus further includes: a third sending unit, configured to send a third message to the relay terminal, where the third message is used to request to establish an end-to-end connection between the first remote terminal and the second remote terminal; the third message carries at least the target identification information.

In some embodiments, the target identification information is carried in a media access control (MAC) sub-header, a radio link control protocol data unit (RLC PDU) header, a packet data convergence protocol (PDCP) PDU header, or a sidelink communication relay adaptation layer protocol data unit (SRAP PDU) header corresponding to the third message.

It should be noted that this apparatus embodiment is an apparatus corresponding to the foregoing method embodiment, and all implementations in the foregoing method embodiments are applicable to this apparatus embodiment and can achieve the same technical effect.

It should be noted that the division of units in the embodiments of the present disclosure is schematic and only for logical function division. There may be other division manners in actual implementation. In addition, functional units in the embodiments of the present disclosure may be integrated into one processing unit, or each unit may exist physically independently, or two or more units may be integrated into one unit. The integrated unit may be implemented in the form of hardware or a software functional unit.

When the integrated unit is implemented in the form of a software functional unit and sold or used as an independent product, it may be stored in a processor-readable storage medium. Based on this understanding, the technical solution of the present disclosure essentially or the part that contributes to the related art or all or part of the technical solution may be embodied in the form of a software product. The computer software product is stored in a storage medium and includes several instructions for enabling a computer device (which may be a personal computer, a server, a network device, etc.) or a processor to execute all or part of the steps of the method described in the embodiments of the present disclosure. The foregoing storage medium includes various media that can store program codes, such as a USB flash drive, a removable hard disk, a Read-Only Memory (ROM), a Random Access Memory (RAM), a magnetic disk, or an optical disk.

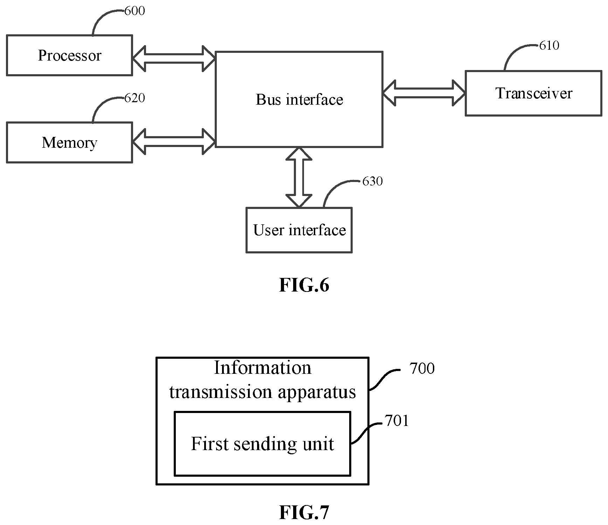

As shown in FIG. 6, an embodiment of the present disclosure further provides a terminal, where the terminal is a first remote terminal, including a processor 600, a transceiver 610, a memory 620, and a program stored on the memory 620 and executable on the processor 600. The transceiver 610 is connected to the processor 600 and the memory 620 through a bus interface. The processor 600 is configured to read the program in the memory and perform the following processes:
obtaining target identification information of a second remote terminal from a relay terminal, where the target identification information is used by the first remote terminal to establish an end-to-end connection with the second remote terminal through the relay terminal; the target identification information includes a layer-2 identifier and/or a local identifier.

The transceiver 610 is configured to send and receive data under the control of the processor 600.

In FIG. 6, the bus architecture may include any number of interconnected buses and bridges. Specifically, various circuits of one or more processors represented by the processor 600 and a memory represented by the memory 620 are linked together. The bus architecture may also link various other circuits such as peripheral devices, voltage regulators, and power management circuits, which are well known in the art and will not be further described herein. The bus interface provides an interface. The transceiver 610 may be multiple components, i.e., including a transmitter and a receiver, providing a unit for communicating with various other devices on a transmission medium including wireless channels, wired channels, optical cables, etc. For different user equipment, the user interface 630 may also be an interface that can be externally connected to required devices, and the connected devices include but are not limited to a keypad, a display, a speaker, a microphone, a joystick, etc.

The processor 600 is responsible for managing the bus architecture and general processing, and the memory 620 may store data used by the processor 600 when performing operations.

Optionally, the processor 600 may be a Central Processing Unit (CPU), an Application-Specific Integrated Circuit (ASIC), a Field-Programmable Gate Array (FPGA), or a Complex Programmable Logic Device (CPLD), and the processor may also adopt a multi-core architecture.

The processor executes any one of the methods provided in the embodiments of the present disclosure according to the obtained executable instructions by calling the computer program stored in the memory. The processor and the memory may also be physically separated.

In some embodiments, the processor is configured to read the computer program in the memory to perform at least one of the following operations:
receiving a relay-discovery related message from the relay terminal, where the relay-discovery related message carries the layer-2 identifier of the second remote terminal, and the relay-discovery related message includes: a relay discovery announcement message and/or a relay discovery response message;
obtaining the layer-2 identifier of the second remote terminal from the relay terminal during establishing a sidelink communication interface signaling PC5-S or a sidelink communication interface radio resource control PC5-RRC connection with the relay terminal and/or after establishing the PC5-S or PC5-RRC connection with the relay terminal; a quantity of the second remote terminals includes one or more.

In some embodiments, the processor is configured to read the computer program in the memory to perform at least one of the following operations:
receiving a relay-discovery related message from the relay terminal, where the relay-discovery related message carries the local identifier of the second remote terminal, and the relay-discovery related message includes: a relay discovery announcement message and/or a relay discovery response message;
obtaining the local identifier of the second remote terminal from the relay terminal during establishing a PC5-S or PC5-RRC connection with the relay terminal and/or after establishing the PC5-S or PC5-RRC connection with the relay terminal.

In some embodiments, the processor is configured to read the computer program in the memory to perform the following operations:
receive a first message from the relay terminal, where the first message carries at least the local identifier of the second remote terminal;

The first message includes a PC5-S message or a PC5-RRC message.

In some embodiments, the first message further carries at least one of the following: a terminal identifier of the second remote terminal and a layer-2 identifier of the second remote terminal.

In some embodiments, the processor is configured to read the computer program in the memory to further perform the following operations:
sending a second message to the relay terminal, where the second message carries at least one of the following: the terminal identifier of the second remote terminal and the layer-2 identifier of the second remote terminal; the second message includes a PC5-S message or a PC5-RRC message.

In some embodiments, the processor is configured to read the computer program in the memory to further perform the following operations:
sending a third message to the relay terminal, where the third message is used to request to establish an end-to-end connection between the first remote terminal and the second remote terminal; the third message carries at least the target identification information.

In some embodiments, the target identification information is carried in a media access control (MAC) sub-header, a radio link control protocol data unit (RLC PDU) header, a packet data convergence protocol (PDCP) PDU header, or a sidelink communication relay adaptation layer protocol data unit (SRAP PDU) header corresponding to the third message.

It should be noted that the first remote terminal provided in the embodiment of the present disclosure can implement all the method steps implemented in the foregoing method embodiments and achieve the same technical effect. The same parts and beneficial effects as those of the method embodiments will not be described in detail herein.

An embodiment of the present disclosure further provides a computer-readable storage medium, on which a computer program is stored. When the computer program is executed by a processor, the steps of the information transmission method applied to the first remote terminal are implemented. The processor-readable storage medium may be any available medium or data storage device that can be accessed by a processor, including but not limited to a magnetic memory (such as a floppy disk, a hard disk, a magnetic tape, a Magneto-Optical (MO) disk, etc.), an optical memory (such as a Compact Disc (CD), a Digital Versatile Disc (DVD), a Blu-ray Disc (BD), a High-Definition Versatile Disc (HVD), etc.), and a semiconductor memory (such as a ROM, an Erasable Programmable Read-Only Memory (EPROM), an Electrically Erasable Programmable Read-Only Memory (EEPROM), a non-volatile memory (NAND FLASH), a Solid State Disk (SSD), etc.).

As shown in FIG. 7, an embodiment of the present disclosure provides an information transmission apparatus 700 applied to a relay terminal, including: a first sending unit 701, configured to send target identification information of a second remote terminal to a first remote terminal, where the target identification information is used by the first remote terminal to establish an end-to-end connection with the second remote terminal through the relay terminal; the target identification information includes a layer-2 identifier and/or a local identifier.

In some embodiments, the first sending unit 701 is configured to implement at least one of the following:
sending a relay-discovery related message to the first remote terminal, where the relay-discovery related message carries the layer-2 identifier of the second remote terminal, and the relay-discovery related message includes: a relay discovery announcement message and/or a relay discovery response message;
sending the layer-2 identifier of the second remote terminal to the first remote terminal during establishing a PC5-S or PC5-RRC connection with the first remote terminal and/or after establishing the PC5-S or PC5-RRC connection with the first remote terminal; a quantity of the second remote terminals includes one or more.

In some embodiments, the first sending unit 701 is configured to implement at least one of the following:
sending a relay-discovery related message to the first remote terminal, where the relay-discovery related message carries the local identifier of the second remote terminal, and the relay-discovery related message includes: a relay discovery announcement message and/or a relay discovery response message; sending the local identifier of the second remote terminal to the first remote terminal during establishing a PC5-S or PC5-RRC connection with the first remote terminal, and/or after establishing the PC5-S or PC5-RRC connection with the first remote terminal.

In some embodiments, the first sending unit 701 is configured to: send a first message to the first remote terminal, where the first message carries at least the local identifier of the second remote terminal; the first message includes a PC5-S message or a PC5-RRC message.

In some embodiments, the first message further carries at least one of the following: a terminal identifier of the second remote terminal and a layer-2 identifier of the second remote terminal.

In some embodiments, the apparatus further includes: a first receiving unit, configured to receive a second message from the first remote terminal, where the second message carries at least one of the following: the terminal identifier of the second remote terminal and the layer-2 identifier of the second remote terminal;
The second message includes a PC5-S message or a PC5-RRC message.

In some embodiments, the apparatus further includes: a second receiving unit, configured to receive a third message from the first remote terminal, where the third message is used to request to establish an end-to-end connection between the first remote terminal and the second remote terminal; the third message carries at least the target identification information.

In some embodiments, the target identification information is carried in a MAC sub-header, an RLC PDU header, a PDCP PDU header, or an SRAP PDU header corresponding to the third message.

In some embodiments, the apparatus further includes: a determining unit, configured to determine the second remote terminal corresponding to the third message according to the target identification information; forward the third message to the second remote terminal.

It should be noted that this apparatus embodiment is an apparatus corresponding to the foregoing method embodiment, and all implementations in the foregoing method embodiments are applicable to this apparatus embodiment and can achieve the same technical effect.

It should be noted that the division of units in the embodiments of the present disclosure is schematic and only for logical function division. There may be other division manners in actual implementation. In addition, functional units in the embodiments of the present disclosure may be integrated into one processing unit, or each unit may exist physically independently, or two or more units may be integrated into one unit. The integrated unit may be implemented in the form of hardware or a software functional unit.

When the integrated unit is implemented in the form of a software functional unit and sold or used as an independent product, it may be stored in a processor-readable storage medium. Based on this understanding, the technical solution of the present disclosure essentially or the part that contributes to the related art or all or part of the technical solution may be embodied in the form of a software product. The computer software product is stored in a storage medium and includes several instructions for enabling a computer device (which may be a personal computer, a server, a network device, etc.) or a processor to execute all or part of the steps of the method described in the embodiments of the present disclosure. The foregoing storage medium includes various media that can store program codes, such as a USB flash drive, a removable hard disk, a Read-Only Memory (ROM), a Random Access Memory (RAM), a magnetic disk, or an optical disk.

An embodiment of the present disclosure further provides a terminal, where the terminal is a relay terminal, and the structure of the relay terminal is shown in FIG. 6, which will not be repeated here.

The processor is configured to read the computer program in the memory to perform the following operations:
sending target identification information of a second remote terminal to a first remote terminal, where the target identification information is used by the first remote terminal to establish an end-to-end connection with the second remote terminal through the relay terminal; the target identification information includes a layer-2 identifier and/or a local identifier.

In some embodiments, the processor is configured to read the computer program in the memory to perform at least one of the following operations:
sending a relay-discovery related message to the first remote terminal, wherein the relay-discovery related message carries the layer-2 identifier of the second remote terminal, and the relay-discovery related message includes: a relay discovery announcement message and/or a relay discovery response message;
sending the layer-2 identifier of the second remote terminal to the first remote terminal during establishing a PC5-S or PC5-RRC connection with the first remote terminal and/or after establishing the PC5-S or PC5-RRC connection with the first remote terminal; a quantity of the second remote terminals includes one or more.

In some embodiments, the processor is configured to read the computer program in the memory to perform at least one of the following operations:
sending a relay-discovery related message to the first remote terminal, where the relay-discovery related message carries the local identifier of the second remote terminal, and the relay-discovery related message includes: a relay discovery announcement message and/or a relay discovery response message;
sending the local identifier of the second remote terminal to the first remote terminal during establishing a PC5-S or PC5-RRC connection with the first remote terminal and/or after establishing the PC5-S or PC5-RRC connection with the first remote terminal.

In some embodiments, the processor is configured to read the computer program in the memory to perform the following operations:
sending a first message to the first remote terminal, where the first message carries at least the local identifier of the second remote terminal; the first message includes a PC5-S message or a PC5-RRC message.

In some embodiments, the first message further carries at least one of the following: a terminal identifier of the second remote terminal and a layer-2 identifier of the second remote terminal.

In some embodiments, the processor is configured to read the computer program in the memory to further perform the following operations:
receiving a second message from the first remote terminal, where the second message carries at least one of the following: the terminal identifier of the second remote terminal and the layer-2 identifier of the second remote terminal; the second message includes a PC5-S message or a PC5-RRC message.

In some embodiments, the processor is configured to read the computer program in the memory to further perform the following operations:
receiving a third message from the first remote terminal, where the third message is used to request to establish an end-to-end connection between the first remote terminal and the second remote terminal; the third message carries at least the target identification information.

In some embodiments, the target identification information is carried in a MAC sub-header, an RLC PDU header, a PDCP PDU header, or an SRAP PDU header corresponding to the third message.

In some embodiments, the processor is configured to read the computer program in the memory to further perform the following operations:
determining the second remote terminal corresponding to the third message according to the target identification information;
forwarding the third message to the second remote terminal.

It should be noted that the relay terminal provided in the embodiment of the present disclosure can implement all the method steps implemented in the foregoing method embodiments and achieve the same technical effect. The same parts and beneficial effects as those of the method embodiments will not be described in detail herein.

An embodiment of the present disclosure further provides a computer-readable storage medium, on which a computer program is stored. When the computer program is executed by a processor, the steps of the information transmission method applied to the relay terminal are implemented. The processor-readable storage medium may be any available medium or data storage device that can be accessed by a processor, including but not limited to a magnetic memory (such as a floppy disk, a hard disk, a magnetic tape, a Magneto-Optical (MO) disk, etc.), an optical memory (such as a CD, a DVD, a BD, an HVD, etc.), and a semiconductor memory (such as a ROM, an EPROM, an EEPROM, a non-volatile memory (NAND FLASH), a Solid State Disk (SSD), etc.).

Those skilled in the art should understand that the embodiments of the present disclosure may be provided as a method, a system, or a computer program product. Therefore, the present disclosure may adopt the form of an entirely hardware embodiment, an entirely software embodiment, or an embodiment combining software and hardware. Moreover, the present disclosure may adopt the form of a computer program product implemented on one or more computer-usable storage media (including but not limited to disk storage and optical storage) containing computer-usable program codes.

The present disclosure is described with reference to flowcharts and/or block diagrams of methods, devices (systems), and computer program products according to the embodiments of the present disclosure. It should be understood that each flow and/or block in the flowcharts and/or block diagrams, and combinations of flows and/or blocks in the flowcharts and/or block diagrams can be implemented by computer-executable instructions. These computer-executable instructions can be provided to the processor of a general-purpose computer, a special-purpose computer, an embedded processor, or other programmable data processing devices to generate a machine, so that the instructions executed by the processor of the computer or other programmable data processing devices generate a device for implementing the functions specified in one or more flows in the flowcharts and/or one or more blocks in the block diagrams.

These processor-executable instructions can also be stored in a processor-readable memory that can guide a computer or other programmable data processing devices to work in a specific manner, so that the instructions stored in the processor-readable memory generate an article of manufacture including an instruction device, which implements the functions specified in one or more flows in the flowcharts and/or one or more blocks in the block diagrams.

These processor-executable instructions can also be loaded onto a computer or other programmable data processing devices, so that a series of operation steps are performed on the computer or other programmable devices to generate computer-implemented processing. Thus, the instructions executed on the computer or other programmable devices provide steps for implementing the functions specified in one or more flows in the flowcharts and/or one or more blocks in the block diagrams.

Obviously, those skilled in the art can make various modifications and variations to the present disclosure without departing from the spirit and scope of the present disclosure. Therefore, if these modifications and variations of the present disclosure fall within the scope of the claims of the present disclosure and their equivalent technologies, the present disclosure is also intended to include these modifications and variations.

## Claims

1. An information transmission method performed by a first remote terminal, the method comprising:
obtaining target identification information of a second remote terminal from a relay terminal, wherein the target identification information is used by the first remote terminal to establish an end-to-end connection with the second remote terminal through the relay terminal;
wherein the target identification information comprises a layer-2 identifier and/or a local identifier.

2. The method according to claim 1, wherein obtaining the layer-2 identifier of the second remote terminal from the relay terminal comprises at least one of the following:
receiving a relay-discovery related message from the relay terminal, wherein the relay-discovery related message carries the layer-2 identifier of the second remote terminal, and the relay-discovery related message comprises: a relay discovery announcement message and/or a relay discovery response message;
obtaining the layer-2 identifier of the second remote terminal from the relay terminal during establishing a sidelink communication interface signaling PC5-S or a sidelink communication interface radio resource control PC5-RRC connection with the relay terminal and/or after establishing the PC5-S or PC5-RRC connection with the relay terminal;
wherein a quantity of the second remote terminals is one or more.

3. The method according to claim 1, wherein obtaining the local identifier of the second remote terminal from the relay terminal comprises at least one of the following:
receiving a relay-discovery related message from the relay terminal, wherein the relay-discovery related message carries the local identifier of the second remote terminal, and the relay-discovery related message comprises: a relay discovery announcement message and/or a relay discovery response message;
obtaining the local identifier of the second remote terminal from the relay terminal during establishing a PC5-S or PC5-RRC connection with the relay terminal and/or after establishing the PC5-S or PC5-RRC connection with the relay terminal.

4. The method according to claim 3, wherein obtaining the local identifier of the second remote terminal from the relay terminal comprises:
receiving a first message from the relay terminal, wherein the first message carries at least the local identifier of the second remote terminal;
wherein the first message comprises the PC5-S message or the PC5-RRC message.

5. The method according to claim 4, wherein the first message further carries at least one of the following: a terminal identifier of the second remote terminal and a layer-2 identifier of the second remote terminal.

6. The method according to any one of claims 3-5, further comprising:
sending a second message to the relay terminal, wherein the second message carries at least one of the following: the terminal identifier of the second remote terminal and the layer-2 identifier of the second remote terminal;
wherein the second message comprises the PC5-S message or the PC5-RRC message.

7. The method according to claim 1, further comprising:
sending a third message to the relay terminal, wherein the third message is used to request to establish an end-to-end connection between the first remote terminal and the second remote terminal;
wherein the third message carries at least the target identification information.

8. The method according to claim 7, wherein the target identification information is carried in a media access control (MAC) sub-header, a radio link control protocol data unit (RLC PDU) header, a packet data convergence protocol (PDCP) PDU header, or a sidelink communication relay adaptation layer protocol data unit (SRAP PDU) header corresponding to the third message.

9. An information transmission method performed by a relay terminal, the method comprising:
sending target identification information of a second remote terminal to a first remote terminal, wherein the target identification information is used by the first remote terminal to establish an end-to-end connection with the second remote terminal through the relay terminal;
wherein the target identification information comprises a layer-2 identifier and/or a local identifier.

10. The method according to claim 9, wherein sending the layer-2 identifier of the second remote terminal to the first remote terminal comprises at least one of the following:
sending a relay-discovery related message to the first remote terminal, wherein the relay-discovery related message carries the layer-2 identifier of the second remote terminal, and the relay-discovery related message comprises: a relay discovery announcement message and/or a relay discovery response message;
sending the layer-2 identifier of the second remote terminal to the first remote terminal during establishing a PC5-S or PC5-RRC connection with the first remote terminal and/or after establishing the PC5-S or PC5-RRC connection with the first remote terminal;
wherein a quantity of the second remote terminals is one or more.

11. The method according to claim 9, wherein sending the local identifier of the second remote terminal to the first remote terminal comprises at least one of the following:
sending a relay-discovery related message to the first remote terminal, wherein the relay-discovery related message carries the local identifier of the second remote terminal, and the relay-discovery related message comprises: a relay discovery announcement message and/or a relay discovery response message;
sending the local identifier of the second remote terminal to the first remote terminal during establishing a PC5-S or PC5-RRC connection with the first remote terminal and/or after establishing the PC5-S or PC5-RRC connection with the first remote terminal.

12. The method according to claim 11, wherein sending the local identifier of the second remote terminal to the first remote terminal comprises:
sending a first message to the first remote terminal, wherein the first message carries at least the local identifier of the second remote terminal;
wherein the first message comprises the PC5-S message or the PC5-RRC message.

13. The method according to claim 12, wherein the first message further carries at least one of the following: a terminal identifier of the second remote terminal and a layer-2 identifier of the second remote terminal.

14. The method according to any one of claims 11-13, further comprising:
receiving a second message from the first remote terminal, wherein the second message carries at least one of the following: the terminal identifier of the second remote terminal and the layer-2 identifier of the second remote terminal;
the second message comprises a PC5-S message or a PC5-RRC message.

15. The method according to claim 9, further comprising:
receiving a third message from the first remote terminal, wherein the third message is used to request to establish an end-to-end connection between the first remote terminal and the second remote terminal;
wherein the third message carries at least the target identification information.

16. The method according to claim 15, wherein the target identification information is carried in a MAC sub-header, an RLC PDU header, a PDCP PDU header, or an SRAP PDU header corresponding to the third message.

17. The method according to claim 15, further comprising:
determining the second remote terminal corresponding to the third message according to the target identification information;
forwarding the third message to the second remote terminal.

18. A terminal, wherein the terminal is a first remote terminal, and the terminal comprises a memory, a transceiver, and a processor:
the memory is configured to store a computer program; the transceiver is configured to send and receive data under the control of the processor; the processor is configured to read the computer program in the memory and perform the following operations:
obtaining target identification information of a second remote terminal from a relay terminal, wherein the target identification information is used by the first remote terminal to establish an end-to-end connection with the second remote terminal through the relay terminal;
the target identification information comprises a layer-2 identifier and/or a local identifier.

19. The terminal according to claim 18, wherein the processor is configured to read the computer program in the memory to perform at least one of the following operations:
receiving a relay-discovery related message from the relay terminal, wherein the relay-discovery related message carries the layer-2 identifier of the second remote terminal, and the relay-discovery related message comprises: a relay discovery announcement message and/or a relay discovery response message;
obtaining the layer-2 identifier of the second remote terminal from the relay terminal during establishing a sidelink communication interface signaling PC5-S or a sidelink communication interface radio resource control PC5-RRC connection with the relay terminal and/or after establishing the PC5-S or PC5-RRC connection with the relay terminal;
wherein a quantity of the second remote terminals is one or more.

20. The terminal according to claim 18, wherein the processor is configured to read the computer program in the memory to perform at least one of the following operations:
receiving a relay-discovery related message from the relay terminal, wherein the relay-discovery related message carries the local identifier of the second remote terminal, and the relay-discovery related message comprises: a relay discovery announcement message and/or a relay discovery response message;
obtaining the local identifier of the second remote terminal from the relay terminal during establishing a PC5-S or PC5-RRC connection with the relay terminal and/or after establishing the PC5-S or PC5-RRC connection with the relay terminal.

21. The terminal according to claim 20, wherein the processor is configured to read the computer program in the memory to perform the following operations:
receiving a first message from the relay terminal, wherein the first message carries at least the local identifier of the second remote terminal;
wherein the first message comprises the PC5-S message or the PC5-RRC message.

22. The terminal according to claim 21, wherein the first message further carries at least one of the following: a terminal identifier of the second remote terminal and a layer-2 identifier of the second remote terminal.

23. The terminal according to any one of claims 20-22, wherein the processor is configured to read the computer program in the memory to further perform the following operations:
sending a second message to the relay terminal, wherein the second message carries at least one of the following: the terminal identifier of the second remote terminal and the layer-2 identifier of the second remote terminal;
wherein the second message comprises the PC5-S message or the PC5-RRC message.

24. The terminal according to claim 18, wherein the processor is configured to read the computer program in the memory to further perform the following operations:
sending a third message to the relay terminal, wherein the third message is used to request to establish an end-to-end connection between the first remote terminal and the second remote terminal;
wherein the third message carries at least the target identification information.

25. The terminal according to claim 24, wherein the target identification information is carried in a media access control (MAC) sub-header, a radio link control protocol data unit (RLC PDU) header, a packet data convergence protocol (PDCP) PDU header, or a sidelink communication relay adaptation layer protocol data unit (SRAP PDU) header corresponding to the third message.

26. A terminal, wherein the terminal is a relay terminal, and the terminal comprises a memory, a transceiver, and a processor:
the memory is configured to store a computer program; the transceiver is configured to send and receive data under the control of the processor; the processor is configured to read the computer program in the memory and perform the following operations:
sending target identification information of a second remote terminal to a first remote terminal, wherein the target identification information is used by the first remote terminal to establish an end-to-end connection with the second remote terminal through the relay terminal;
wherein the target identification information comprises a layer-2 identifier and/or a local identifier.

27. The terminal according to claim 26, wherein the processor is configured to read the computer program in the memory to perform at least one of the following operations:
sending a relay-discovery related message to the first remote terminal, wherein the relay-discovery related message carries the layer-2 identifier of the second remote terminal, and the relay-discovery related message comprises: a relay discovery announcement message and/or a relay discovery response message;
sending the layer-2 identifier of the second remote terminal to the first remote terminal during establishing a PC5-S or PC5-RRC connection with the first remote terminal and/or after establishing the PC5-S or PC5-RRC connection with the first remote terminal;
wherein a quantity of the second remote terminals is one or more.

28. The terminal according to claim 26, wherein the processor is configured to read the computer program in the memory to perform at least one of the following operations:
sending a relay-discovery related message to the first remote terminal, wherein the relay-discovery related message carries the local identifier of the second remote terminal, and the relay-discovery related message comprises: a relay discovery announcement message and/or a relay discovery response message;
sending the local identifier of the second remote terminal to the first remote terminal during establishing a PC5-S or PC5-RRC connection with the first remote terminal and/or after establishing the PC5-S or PC5-RRC connection with the first remote terminal.

29. The terminal according to claim 28, wherein the processor is configured to read the computer program in the memory to perform the following operations:
sending a first message to the first remote terminal, wherein the first message carries at least the local identifier of the second remote terminal;
the first message comprises the PC5-S message or the PC5-RRC message.

30. The terminal according to claim 29, wherein the first message further carries at least one of the following: a terminal identifier of the second remote terminal and a layer-2 identifier of the second remote terminal.

31. The terminal according to any one of claims 28-30, wherein the processor is configured to read the computer program in the memory to further perform the following operations:
receiving a second message from the first remote terminal, wherein the second message carries at least one of the following: the terminal identifier of the second remote terminal and the layer-2 identifier of the second remote terminal;
the second message comprises the PC5-S message or the PC5-RRC message.

32. The terminal according to claim 26, wherein the processor is configured to read the computer program in the memory to further perform the following operations:
receiving a third message from the first remote terminal, wherein the third message is used to request to establish an end-to-end connection between the first remote terminal and the second remote terminal;
wherein the third message carries at least the target identification information.

33. The terminal according to claim 32, wherein the target identification information is carried in a MAC sub-header, an RLC PDU header, a PDCP PDU header, or an SRAP PDU header corresponding to the third message.

34. The terminal according to claim 32, wherein the processor is configured to read the computer program in the memory to further perform the following operations:
determining the second remote terminal corresponding to the third message according to the target identification information;
forwarding the third message to the second remote terminal.

35. An information transmission apparatus applied to a first remote terminal, the apparatus comprising:
an obtaining unit, configured to obtain target identification information of a second remote terminal from a relay terminal, wherein the target identification information is used by the first remote terminal to establish an end-to-end connection with the second remote terminal through the relay terminal;
the target identification information comprises a layer-2 identifier and/or a local identifier.

36. The apparatus according to claim 35, wherein the obtaining unit is configured to implement at least one of the following:
receiving a relay-discovery related message from the relay terminal, wherein the relay-discovery related message carries the layer-2 identifier of the second remote terminal, and the relay-discovery related message comprises: a relay discovery announcement message and/or a relay discovery response message;
obtaining the layer-2 identifier of the second remote terminal from the relay terminal during establishing a sidelink communication interface signaling PC5-S or a sidelink communication interface radio resource control PC5-RRC connection with the relay terminal and/or after establishing the PC5-S or PC5-RRC connection with the relay terminal;
a quantity of the second remote terminals is one or more.

37. The apparatus according to claim 35, wherein the obtaining unit is configured to implement at least one of the following:
receiving a relay-discovery related message from the relay terminal, wherein the relay-discovery related message carries the local identifier of the second remote terminal, and the relay-discovery related message comprises: a relay discovery announcement message and/or a relay discovery response message;
obtaining the local identifier of the second remote terminal from the relay terminal during establishing a PC5-S or PC5-RRC connection with the relay terminal and/or after establishing the PC5-S or PC5-RRC connection with the relay terminal.

38. The apparatus according to claim 37, wherein the obtaining unit is configured to:
receive a first message from the relay terminal, wherein the first message carries at least the local identifier of the second remote terminal;
the first message comprises the PC5-S message or the PC5-RRC message.

39. The apparatus according to claim 38, wherein the first message further carries at least one of the following: a terminal identifier of the second remote terminal and a layer-2 identifier of the second remote terminal.

40. The apparatus according to any one of claims 37-39, further comprising:
a second sending unit, configured to send a second message to the relay terminal, wherein the second message carries at least one of the following: the terminal identifier of the second remote terminal and the layer-2 identifier of the second remote terminal;
the second message comprises the PC5-S message or the PC5-RRC message.

41. The apparatus according to claim 35, further comprising:
a third sending unit, configured to send a third message to the relay terminal, wherein the third message is used to request to establish an end-to-end connection between the first remote terminal and the second remote terminal;
the third message carries at least the target identification information.

42. The apparatus according to claim 41, wherein the target identification information is carried in a media access control (MAC) sub-header, a radio link control protocol data unit (RLC PDU) header, a packet data convergence protocol (PDCP) PDU header, or a sidelink communication relay adaptation layer protocol data unit (SRAP PDU) header corresponding to the third message.

43. An information transmission apparatus applied to a relay terminal, the apparatus comprising:
a first sending unit, configured to send target identification information of a second remote terminal to a first remote terminal, wherein the target identification information is used by the first remote terminal to establish an end-to-end connection with the second remote terminal through the relay terminal;
the target identification information comprises a layer-2 identifier and/or a local identifier.

44. The apparatus according to claim 43, wherein the first sending unit is configured to implement at least one of the following:
sending a relay-discovery related message to the first remote terminal, wherein the relay-discovery related message carries the layer-2 identifier of the second remote terminal, and the relay-discovery related message comprises: a relay discovery announcement message and/or a relay discovery response message;
sending the layer-2 identifier of the second remote terminal to the first remote terminal during establishing a PC5-S or PC5-RRC connection with the first remote terminal and/or after establishing the PC5-S or PC5-RRC connection with the first remote terminal;
a quantity of the second remote terminals is one or more.

45. The apparatus according to claim 43, wherein the first sending unit is configured to implement at least one of the following:
sending a relay-discovery related message to the first remote terminal, wherein the relay-discovery related message carries the local identifier of the second remote terminal, and the relay-discovery related message comprises: a relay discovery announcement message and/or a relay discovery response message;
sending the local identifier of the second remote terminal to the first remote terminal during establishing a PC5-S or PC5-RRC connection with the first remote terminal and/or after establishing the PC5-S or PC5-RRC connection with the first remote terminal.

46. The apparatus according to claim 45, wherein the first sending unit is configured to:
send a first message to the first remote terminal, wherein the first message carries at least the local identifier of the second remote terminal;
the first message comprises the PC5-S message or the PC5-RRC message.

47. The apparatus according to claim 46, wherein the first message further carries at least one of the following: a terminal identifier of the second remote terminal and a layer-2 identifier of the second remote terminal.

48. The apparatus according to any one of claims 45-47, further comprising:
a first receiving unit, configured to receive a second message from the first remote terminal, wherein the second message carries at least one of the following: the terminal identifier of the second remote terminal and the layer-2 identifier of the second remote terminal;
the second message comprises the PC5-S message or the PC5-RRC message.

49. The apparatus according to claim 43, further comprising:
a second receiving unit, configured to receive a third message from the first remote terminal, wherein the third message is used to request to establish an end-to-end connection between the first remote terminal and the second remote terminal;
the third message carries at least the target identification information.

50. The apparatus according to claim 49, wherein the target identification information is carried in a MAC sub-header, an RLC PDU header, a PDCP PDU header, or an SRAP PDU header corresponding to the third message.

51. The apparatus according to claim 49, further comprising:
a determining unit, configured to determine the second remote terminal corresponding to the third message according to the target identification information;
forward the third message to the second remote terminal.

52. A processor-readable storage medium, wherein the processor-readable storage medium stores a computer program, and the computer program is configured to cause a processor to execute the method according to any one of claims 1 to 17.
